# EUROPÄISCHE PATENTSCHRIFT

(11) **EP 4 024 075 B1**
(45) Veröffentlichungstag und Bekanntmachung des Hinweises auf die Patenterteilung: **21.08.2024**
(21) Anmeldenummer: 21205256.7
(22) Anmeldetag: 28.10.2021
(51) Int. Cl.: G01S 5/00, G01S 5/02, G01S 5/06, G01S 5/14, F16P 3/00, H04W 4/00

(54) **SICHERHEITSSYSTEM UND VERFAHREN MIT EINEM SICHERHEITSSYSTEM**
SAFETY SYSTEM AND METHOD WITH A SAFETY SYSTEM
SYSTÈME DE SÉCURITÉ ET PROCÉDÉ COMPRENANT UN SYSTÈME DE SÉCURITÉ

(30) Priorität: 16.12.2020 DE 102020133789
(43) Veröffentlichungstag der Anmeldung: 06.07.2022
(73) Patentinhaber: SICK AG, 79183 Waldkirch (DE)
(72) Erfinder: HAMMES, Markus, 79117 Freiburg (DE); AMS, Mathias, 79211 Denzlingen (DE); FETH, Patrik, 79261 Gutach (DE); WAIBEL, Holger, 79111 Freiburg (DE); SIXT, Andreas, 79312 Emmendingen (DE); HOFMANN, Tobias, 68165 Mannheim (DE); MOSGALEWSKY, Eduard, 77652 Offenburg (DE); NEUDORF Matthias, 79211 Denzlingen (DE); DAU, Lasse, 22846 Norderstedt (DE); SCHLEMMER, Jan, Freiburg (DE); RUH, Dominic, 79102 Freiburg (DE); ALBERT, Magnus, 79104 Freiburg (DE); FETH, Hagen, Freiburg (DE)

(56) Entgegenhaltungen:
- EP-A1- 3 855 208
- WO-A1-2016/029238
- US-A1- 2016 110 984

## Beschreibung

Die vorliegende Erfindung betrifft ein Sicherheitssystem gemäß dem Oberbegriff von Anspruch 1 und ein Verfahren gemäß dem Oberbegriff von Anspruch 23.

Es ist in der industriellen Sicherheitstechnik aktuelle Praxis, Gefährdungen lokal an der Gefährdungsstelle zu beherrschen, indem eine Annäherung oder Anwesenheit einer Person detektiert wird und sicherheitsgerichtet eine Maschine oder Fahrbewegung gestoppt oder die Bewegung verlangsamt wird.

Der Stand der Technik beschreibt lediglich lokale Sicherheitskonzepte.

Die US 2016/0110984 A1 offenbart ein integriertes Tag-Gerät und ein aktives Tag sendet ein Tag-Signal. Ein Lesegerät erkennt Tag-Geräte-Identifikationsinformationen, erzeugt und sendet ein Tag-Geräte-Erkennungssignal, empfängt ein Risiko-Benachrichtigungssignal und informiert einen Arbeiter. Ein Arbeiter-Terminal prüft dessen Standortinformationen, schließt die geprüften Standortinformationen in ein Karteninformations-Anforderungssignal ein und sendet das Karteninformations-Anforderungssignal, empfängt und zeigt Fabrikanlagen-Karteninformationen an. Ein intelligenter integrierter Sicherheitsmanagement-Steuerungsserver prüft Lesergeräte-Identifizierungsinformationen und Tag-Geräte-Identifizierungsinformationen, prüft Installationsstandortinformationen, verfolgt einen Standort und sagt einen Bewegungspfad jeder sich bewegenden Einheit voraus, klassifiziert und speichert ein Bewegungsmuster und einen Bewegungspfad.

Eine Aufgabe der Erfindung besteht darin, ein Sicherheitssystem anzugeben, das nicht nur eine lokale Absicherungsmöglichkeit bietet. Es soll ermöglicht werden, dass auf Basis vorliegender Positionsinformationen alle Personen und mobilen Objekte bzw. mobile Fahrzeuge, Fertigungs- und/oder Logistikabläufe derart steuerbar sind, dass ein Restrisiko für alle beteiligten Personen tolerierbar ist und eine Produktivität einer Anlage bzw. Automatisierungsabläufe optimal sind.

Die Aufgabe wird gemäß Anspruch 1 gelöst durch ein Sicherheitssystem zur Lokalisierung von mindestens zwei ortsveränderlichen Objekten, mit mindestens einer Steuer-und Auswerteeinheit mit mindestens einem Funkortungssystem, wobei das Funkortungssystem mindestens drei angeordnete Funkstationen aufweist, wobei an den Objekten jeweils mindestens ein Funktransponder angeordnet ist, wobei mittels dem Funkortungssystem Positionsdaten des Funktransponders und damit Positionsdaten der Objekte ermittelbar sind, wobei die Positionsdaten von der Funkstation des Funkortungssystems an die Steuer- und Auswerteeinheit übermittelbar sind, und/oder die Positionsdaten von dem Funktransponder an die Steuer- und Auswerteeinheit übermittelbar sind, wobei die Steuer- und Auswerteeinheit ausgebildet ist, die Positionsdaten der Funktransponder zyklisch zu erfassen, wobei die Funktransponder eine Identifikation aufweisen, wobei jeweils ein Funktransponder jeweils einem Objekt zugeordnet ist, wodurch die Steuer- und Auswerteeinheit ausgebildet ist, die Objekte zu unterscheiden, wobei die Steuer- und Auswerteeinheit ausgebildet ist, jedem Objekt eine Risikokennzahl zuzuordnen mindestens abhängig von der Position des Objekts zu einem anderen Objekt, wobei die Risikokennzahl angibt, wie groß die Gefährdung eines Objekts ist, wobei erste Objekte Personen sind und zweite Objekte mobile Fahrzeuge sind, wobei das Funkortungssystem ein Ultrabreitband-Funkortungssystem ist, wobei die verwendete Frequenz im Bereich von 3,1 GHz bis 10,6 GHz ist, wobei die Sendeenergie pro Funkstation maximal 0,5 mW beträgt und mindestens eine Auftragsplanung für eine Anlage und Zielkoordinaten der mobilen Fahrzeuge von der Steuer- und Auswerteeinheit eingelesen werden, wobei Prozessschritte der Maschine oder Anlage von der Steuer-und Auswerteeinheit eingelesen werden, wobei mittels der Steuer- und Auswerteeinheit ein Produktivitätsmaß der Anlage, der Maschine und/oder der Objekte erfasst wird, wobei die Steuer- und Auswerteeinheit ausgebildet ist, die Maschine und/oder das mobile Fahrzeug zu steuern und damit zu beeinflussen, wobei bei unmittelbar drohender Gefährdung eine Änderung einer Reihenfolge einzelner Prozessschritte eines Automatisierungsablaufs vorgesehen ist.

Weiter wird die Aufgabe gemäß Anspruch 23 gelöst mit einem Verfahren mit einem Sicherheitssystem zur Lokalisierung von mindestens zwei ortsveränderlichen Objekten, mit mindestens einer Steuer- und Auswerteeinheit, mit mindestens einem Funkortungssystem, wobei das Funkortungssystem mindestens drei angeordnete Funkstationen aufweist, wobei an den Objekten jeweils mindestens ein Funktransponder angeordnet wird, wobei mittels dem Funkortungssystem Positionsdaten des Funktransponders und damit Positionsdaten der Objekte ermittelt werden, wobei die Positionsdaten von der Funkstation des Funkortungssystems an die Steuer- und Auswerteeinheit übermittelt werden, und/oder die Positionsdaten von dem Funktransponder an die Steuer-und Auswerteeinheit übermittelt werden, wobei die Steuer- und Auswerteeinheit ausgebildet ist, die Positionsdaten der Funktransponder zyklisch zu erfassen, wobei die Funktransponder eine Identifikation aufweisen, wobei jeweils ein Funktransponder jeweils einem Objekt zugeordnet wird, wodurch die Steuer- und Auswerteeinheit ausgebildet ist, die Objekte zu unterscheiden, wobei die Steuer- und Auswerteeinheit ausgebildet ist, jedem Objekt eine Risikokennzahl zuzuordnen mindestens abhängig von der Position des Objekts zu einem anderen Objekt, wobei die Risikokennzahl angibt, wie groß die Gefährdung eines Objekts ist wobei erste Objekte Personen sind und zweite Objekte mobile Fahrzeuge sind, wobei das Funkortungssystem ein Ultrabreitband-Funkortungssystem ist, wobei die verwendete Frequenz im Bereich von 3,1 GHz bis 10,6 GHz ist, wobei die Sendeenergie pro Funkstation maximal 0,5 mW beträgt und mindestens eine Auftragsplanung für eine Anlage und Zielkoordinaten der mobilen Fahrzeuge von der Steuer- und Auswerteeinheit eingelesen werden, wobei Prozessschritte der Maschine oder Anlage von der Steuer- und Auswerteeinheit eingelesen werden, wobei mittels der Steuer- und Auswerteeinheit ein Produktivitätsmaß der Anlage, der Maschine und/oder der Objekte erfasst wird, wobei die Steuer- und Auswerteeinheit ausgebildet ist, die Maschine und/oder das mobiles Fahrzeug zu steuern und damit zu beeinflussen, wobei bei unmittelbar drohender Gefährdung eine Änderung einer Reihenfolge einzelner Prozessschritte eines Automatisierungsablaufs vorgesehen ist.

Die Risikokennzahl gibt an, wie groß die Gefährdung eines Objekts ist. Insbesondere gibt die Risikokennzahl an, wie groß die Gefährdung eines Objekts durch eine Gefahrenstelle zum Zeitpunkt t ist. Die Gefahrenstelle kann dabei durch ein anderes Objekt gebildet sein. Die Risikokennzahl ist beispielsweise abhängig vom Abstand zwischen den Objekten und/oder von den Geschwindigkeiten der Objekte bzw. Annäherungsgeschwindigkeit zwischen den Objekten.

Die Erfindung erlaubt es mit Hilfe einer strategischen Risikominderung sehr vorausschauend und frühzeitig reduzierend auf eine Entstehung von Risiken einzuwirken und Gefährdungen ohne die Produktivitätseinbußen bekannter situativer Risikominderungsstrategien zu vermeiden.

Gemäß der Erfindung ist eine Absicherung über größere Bereiche, also beispielsweise von vielen Arbeitsstationen, von vielen Robotern oder beispielsweise gar von ganzen Produktionshallen möglich, da nicht nur eine lokale Anwesenheit oder Annäherung von Objekten detektiert wird, sondern eine Position vieler in einem Umfeld oder Bereich aktiven Objekten detektierbar ist und fortlaufend verfolgt werden kann.

Das hat den Vorteil, dass sich anbahnende Gefährdungen sehr viel frühzeitiger aufgedeckt werden können, da die Steuer- und Auswerteeinheit bzw. das Sicherheitssystem die Positionen von vielen Objekten gleichzeitig kennt und deren zyklischen zeitlichen Verlauf ebenfalls kennt. Dadurch können durch das Sicherheitssystem Maßnahmen zur Risikominderung durchgeführt werden, die sehr viel weniger invasiv in die Automatisierungsabläufe eingreifen und die Produktivität weniger stören.

Die Erfindung stellt sicherheitstechnisch verwendbare Positionsdaten zur Verfügung. Das bedeutet, dass die so gewonnenen Positionsdaten aller Objekte als Grundlage für ein umfassendes, vorausschauendes und produktivitätsoptimierendes Absicherungskonzept verwendet werden können.

Die Positionsverfolgung erfolgt mittels Funkortung. Die Objekte erhalten Funktransponder, über die regelmäßig ein Ortungssignal an die ortsfesten Funkstationen gesendet wird und in der Steuer- und Auswerteeinheit bzw. in einer zentralen Steuerung eine Position bzw. Echtzeitposition des jeweiligen Objekts erzeugt bzw. gebildet wird.

Gemäß der Erfindung sind somit die Positionsinformationen vieler oder aller Objekte oder mobilen Teilnehmer in einem industriellen Arbeitsumfeld in Echtzeit verfügbar.

Die bisher übliche Strategie nach dem Stand der Technik, wonach bei Anwesenheit einer Person in einem Gefahrenbereich z. B. eine Maschine abgeschaltet wird oder verlangsamt wird kann zwar auch gemäß der Erfindung vorgesehen sein, jedoch ist es mit der vorliegenden Erfindung auch möglich, eine Abschaltung oder eine unmittelbare Verlangsamung zu vermeiden, da mehr Informationen zur Gesamtsituation und der Positionen der Objekte vorliegt.

Die Ortung der Funktransponder erfolgt durch Laufzeitmessungen von Funksignalen, die zyklisch zwischen den Funktranspondern und mehreren festen Funkstationen ausgetauscht werden. Diese Triangulation funktioniert sehr gut, wenn die Signale mit ausreichender Signalstärke und auf geradem bzw. direkten Ausbreitungswege übermittelt werden.

Gemäß der Erfindung werden die Signale eines Funktransponders von mehreren ortsfesten Funkstationen bzw. Ankerstationen empfangen und über eine Laufzeitvermessung z.B. ,Time of arrival' (TOA) oder z.B. ,Time Difference of Arrival' (TDOA) die Grundlage für die Ortung geschaffen. Die Berechnung bzw. Schätzung der Position eines Funktransponders geschieht dann auf der Steuer- und Auswerteeinheit beispielsweise einem zentralen RTLS-Server (Real-Time-Location-System-Server), der über eine drahtlose oder drahtgebundene Datenverbindung an alle Funkstationen bzw. Ankerstationen angeschlossen ist. Diesen Modus der Ortung nennt man RTLS-Modus (Real-Time-Location-System-Modus).

Alternativ kann die Positionsinformation jedoch auch auf jedem Funktransponder ermittelt werden. In diesem Fall arbeitet das Sicherheitssystem vergleichbar mit dem GPS-Navigationssystem. Jeder Funktransponder empfängt die Signale der Funkstationen bzw. Ankerstationen, die in einem festen zeitlichen Bezug zueinander ausgesendet werden. Auch hier kann über die verschiedenen Laufzeitmessungen und die Kenntnis der Funkstationspositionen bzw. Ankerpositionen eine Positionsschätzung des Funktransponders vorgenommen werden. Der Funktransponder selbst berechnet seine Position und kann diese bei Bedarf mit Hilfe des UWB-Signals oder anderer drahtloser Datenverbindungen an den RTLS-Server übertragen.

Die Positionsbestimmung im GPS-Modus ist in verschiedener Hinsicht unabhängig von der Positionsbestimmung im RTLS-Modus:
- Die Berechnung findet beispielsweise nicht in einem zentralen Server statt, sondern lokal auf einem Funktransponder.
- Die Grundlage für die Positionsberechnung sind die ermittelten Laufzeiten der Signale der ortsfesten Funkstationen. Im Gegensatz dazu dienen im RTLS-Modus die Signale der Funktransponder zur Laufzeitberechnung.
- Die Entscheidung, welche Untermenge der vorhandenen Funkstationssignale zur Positionsberechnung verwendet werden wird auf Basis der ermittelten Signalgüte und relativen Funkstationspositionen durch den Funktransponder getroffen. Damit wird eine Untermenge der vorhandenen Sendesignale benutzt. Im RTLS-Modus wird umgekehrt auf eine Untermenge der an den verschiedenen Funkstationen empfangenen Signale zurückgegriffen.

Diese Unabhängigkeit der Positionsbestimmung kann nun verwendet werden, um die Ortung zu überprüfen. Wenn beide Modi parallel betrieben werden, d.h. Positionsdaten sowohl im RTLS-Modus als auch im GPS-Modus ermittelt werden, dann kann auf diesem Weg ein diversitärer und redundanter Vergleich zur Überprüfung erfolgen. Voraussetzung ist die Zusammenführung beider Positionsinformationen in der Steuer- und Auswerteeinheit.

Die Erfindung ermöglicht einen strategischen Risikominderungsansatz der sich von dem bekannten situativen Risikominderungsansatz mindestens dadurch unterscheidet, dass zur Situationsbewertung Informationen verwendet werden, die aus einem wesentlich größeren räumlichen Bereich, beispielsweise bestenfalls der gesamten betrachteten Anlage, ermittelt werden.

Aufgrund der größeren Reichweite der Eingangsinformationen und der damit verbundenen größeren Vorwarnzeit bis zur Manifestation einer Gefährdung können weitreichendere Prädiktionen über die erwartete Entwicklung des Geschehens erfolgen und es können mögliche Gefährdungen deutlich früher identifiziert werden, im Vergleich zu bekannten Umfeldsensoren die nur lokal beschränkt sind.

Gemäß der Erfindung sind Maßnahmen zur Risikominderung möglich, die eine eskalierende Abfolge von Maßnahmen ermöglichen, die ihre Wirksamkeit aufgrund längerer Vorlaufzeit besser entfalten und die die Einwirkung auf das Verhalten der beteiligten Personen mit einbeziehen.

Gemäß der Erfindung erfolgt eine Optimierung einer gesamten Anlage oder von Teilbereichen unter Berücksichtigung einer Zwangsbedingung eines tolerierbaren Restrisikos als Entscheidungskriterium.

Die hier verwendete Risikominderung verwendet als Eingangsinformationen vorzugsweise die Positionsinformationen aller Objekte und beispielsweise zugehörige Genauigkeitsinformationen.

In Weiterbildung der Erfindung sind erste Objekte mobile Objekte und zweite Objekte mobile Objekte, wobei die Funktransponder eine Identifikation aufweisen, wobei jeweils ein Funktransponder einem mobilen Objekt zugeordnet ist, wodurch die Steuer- und Auswerteeinheit ausgebildet ist, die mobilen Objekte zu unterscheiden, wobei die Steuer- und Auswerteeinheit ausgebildet ist, jedem mobilen Objekt eine Risikokennzahl zuzuordnen mindestens abhängig von der Position von einem mobilen Objekt zu mindestens einem anderen mobilen Objekt.

Bei dem mobilen Objekt, bzw. einer bewegbaren Maschine bzw. mobilen Maschine kann es sich beispielsweise um ein führerloses Fahrzeug, fahrerloses Fahrzeug bzw. autonomes Fahrzeug, um ein autonom geführtes Fahrzeug (Autonomous Guided Vehicles, AGV), um einen automatisch mobilen Roboter (Automated Mobile Robots, AMR), um einen industriemobilen Roboter (Industrial Mobile Robots, IMR) oder um einen Roboter mit bewegbaren Roboterarmen handeln. Die mobile Maschine weist somit einen Antrieb auf und kann in verschiedenen Richtungen bewegt werden.

In einer alternativen Weiterbildung der Erfindung sind erste Objekte Personen und zweite Objekte mobile Objekte, wobei die Funktransponder eine Identifikation aufweisen, wobei jeweils ein Funktransponder mindestens einer Person und jeweils ein Funktransponder mindestens einem mobilen Objekt zugeordnet ist, wodurch die Steuer- und Auswerteeinheit ausgebildet ist, die Personen und mobilen Objekte zu unterscheiden, wobei die Steuer- und Auswerteeinheit ausgebildet ist, jeder Person eine Risikokennzahl zuzuordnen mindestens abhängig von der Position der Person zu mindestens einem mobilen Objekt.

Gemäß der Weiterbildung ist eine Absicherung über größere Bereiche, beispielsweise von ganzen Produktionshallen möglich, da nicht nur eine lokale Anwesenheit oder Annäherung von Personen detektiert wird, sondern eine Position vieler in einem Umfeld oder Bereich aktiven Personen und mobilen Objekten bzw. mobilen Maschinen detektierbar ist und fortlaufend verfolgt werden kann.

Die Weiterbildung stellt sicherheitstechnisch verwendbare Positionsdaten zur Verfügung. Das bedeutet, dass die so gewonnenen Positionsdaten aller Personen und mobilen Gefahrenstellen als Grundlage für ein umfassendes, vorausschauendes und produktivitätsoptimierendes Absicherungskonzept verwendet werden können.

Bei der Person kann es sich beispielsweise um eine Bedienperson oder Wartungsperson handeln. Die Funktransponder sind beispielsweise an der Kleidung oder einer Ausrüstung der Person angeordnet. Dabei kann es sich beispielsweise um eine Weste handeln, an der die Funktransponder fest fixiert sind. Die Funktransponder sind beispielsweise an den Schultern und im Brust- oder Rückenbereich angeordnet. Jedoch können die Funktransponder auch an anderen Stellen der Person angeordnet sein. Beispielsweise sind zwei Funktransponder an den Schultern einer Weste einer Person angeordnet.

In Weiterbildung der Erfindung ist mindestens eine ortsfest angeordnete Maschine einer Anlage mit einer Gefahrenstelle der Maschine vorhanden, wobei die Position der ortsfest angeordneten Gefahrenstelle der Steuer- und Auswerteeinheit bekannt ist.

Gemäß der Weiterbildung ist eine Absicherung über größere Bereiche, also beispielsweise von vielen Arbeitsstationen, von vielen Robotern oder beispielsweise gar von ganzen Produktionshallen möglich.

Gemäß der Weiterbildung werden Informationen zum Betriebsumfeld, wie zum Beispiel die Kenntnis über zugängliche Bereiche, beispielsweise Fahrwege und die Positionen der Gefahrstellen der Maschinen berücksichtigt.

Beispielsweise kann die ortsfest angeordnete Maschine selbst einen Funktransponder aufweisen, wodurch die Position der Maschine aufgrund des angeordneten Funktransponders bekannt ist. Dadurch kann beispielsweise auch eine Genauigkeit und Funktion des Funkortungssystems unabhängig von den ortsveränderlichen Objekten gegen eine Erwartungshaltung, nämlich den ortsfest angeordneten Funktransponder geprüft werden.

Gemäß der Weiterbildung ist die Steuer- und Auswerteeinheit ausgebildet, jeder Person eine Risikokennzahl zuzuordnen mindestens abhängig von der Position der Person der Position zu der ortsfesten Maschine mit der Gefahrenstelle.

In Weiterbildung der Erfindung ist die Steuer- und Auswerteeinheit ausgebildet, jeweils eine Position der Funktransponder zu unterschiedlichen Zeitpunkten zu ermitteln und daraus eine Geschwindigkeit, eine Beschleunigung, eine Bewegungsrichtung und/oder mindestens eine Bahn (Trajektorie) der Funktransponder zu bestimmen.

Gemäß der Weiterbildung der Erfindung werden vorzugsweise die Geschwindigkeiten und Bewegungsrichtungen aller Personen und mobilen Objekte berücksichtigt.

Die Positionsinformationen dienen zur Berechnung wahrscheinlicher Bewegungsverläufe bzw. Trajektorien aller Objekte, also den Personen oder mobilen Objekten.

Zu jeder Person und jedem mobilen Objekt wird mit Hilfe der Positionsinformationen eine Schar von Bewegungsverläufen ermittelt und beispielsweise mit einem Wahrscheinlichkeitsmaß versehen. Das Wahrscheinlichkeitsmaß wird dabei beispielsweise auf Grundlage der Weglänge und/oder Bewegungsrichtung abgeschätzt. So sind beispielsweise kurze direkte Wege wahrscheinlicher als lange nicht direkte Wege. Weiter kann das Wahrscheinlichkeitsmaß auf Grundlage einer bekannten Historie von Wegstrecken der Objekte abgeschätzt werden. So sind beispielsweise Wege, die in der Vergangenheit häufig genutzt wurden wahrscheinlicher als neue Wegrouten. Weiter kann das Wahrscheinlichkeitsmaß auf der Grundlage von bekannten Störungen abgeschätzt werden. So wird eine gestörte mögliche Route wahrscheinlicher vermieden als eine ungestörte Route.

Aus einer Schar möglicher Trajektorien und der ihnen zugeordneten Wahrscheinlichkeiten wird für jede Person und jedes mobile Objekt bzw. jedes Fahrzeug die wahrscheinlichste Bahn, Route bzw. Trajektorie ausgewählt.

Einer für jede von N Personen ausgewählten Trajektorie wird für jede von M Gefahrstellen eine zeitabhängige Risikokennzahl zugewiesen, die den Abstand bzw. zeitabhängigen Abstand zu Gefahrenstellen und ggf. zu Details der Automatisierungsabläufe berücksichtigt. Im einfachsten Fall kann die Gefährdung binär mit einer Annäherungsschwelle an eine Gefahrenstelle ermittelt werden. Die Risikokennzahl gibt also an, wie groß die Gefährdung einer Person durch eine Gefahrstelle zum Zeitpunkt t ist.

Diese zeitabhängigen Risikokennzahlen für jede Person lassen sich in Form einer N x M Matrix zusammenfassen und daraus eine Norm/Metrik ableiten, die einen zeitabhängigen Gefährdungswert für das Gesamtsystem bzw. für das Sicherheitssystem darstellt. Im einfachsten Fall kann das ein zeitabhängiges Maximum der Gefährdung sein oder auch eine Summe aller Matrixeinträge. Diese numerische Beschreibung des Gesamtsystems erlaubt nun die Verwendung bekannter Optimierungsalgorithmen.

In Weiterbildung der Erfindung weist das Sicherheitssystem eine Karte oder ein Kartenmodel auf und eine Navigation der bewegbaren Maschine erfolgt in der Karte oder dem Kartenmodel.

Dabei kann das Kartenmodel auch Informationen zu Störeinflüsse wie Sperrungen oder Stauinformationen aufweisen.

Dabei kann auch der Vergleich mit zugänglichen Wegen in einem Grundrissplan zur Überprüfung dienen. Im Rahmen der Konfiguration des Ortungssystems wird dazu der Bereich markiert, in dem sich überhaupt mobile Maschinen und Personen aufhalten können, insbesondere begehbare oder befahrbare Wege. Eine Ortung, die außerhalb dieser Bereiche liegt, wird damit einen systematischen Messfehler signalisieren. Das Plausibilitätsmaß ist durch die festgestellte Inkonsistenz reduziert.

Diese konfigurierten Bereiche können ebenfalls zur Verbesserung der Positionsgenauigkeit verwendet werden, indem die Positionsinformation so korrigiert wird, dass sie in einem zugänglichen Bereich liegt. Diese Korrektur kann optional unter Zuhilfenahme von vergangenen Ortungen und Trajektorienschätzungen z.B. mit Hilfe eines Kalmanfilters erfolgen. Eine Korrektur wird das Plausibilitätsmaß einer Positionsinformation verringern, da die Korrektur einen zusätzlichen Unsicherheitsfaktor einbringt.

Auch hier kann durch Berücksichtigung vorangegangener Werte zusätzliche Information nutzbar gemacht werden. Die Korrektur inkonsistenter Positionswerte kann also in Richtung der letzten validen Messung oder gemäß einer Trajektorienschätzung erfolgen.

Weiter ist ein Vergleich von Funkortungen, die mit Hilfe unabhängiger oder unterschiedlicher Teilmengen der verfügbaren Funkstationen bzw. Ankerpunkte ermittelt wurden, möglich.

Das Verfahren macht sich zu Nutze, dass für die Bestimmung der Position in der Regel nicht alle Funkstationen bzw. Ankerpunkte benötigt werden und damit eine Plausibilisierung aus den Messdaten selbst möglich ist, indem dieselbe Ortungsaufgabe von zwei unterschiedlichen Untergruppen der stationären Funkstationen durchgeführt wird. Hier wird wie beim Vergleich unabhängiger Messungen verschiedener Funktransponder ein Quervergleich mit der Erwartungshaltung der Übereinstimmung geprüft.

In Weiterbildung der Erfindung sind an den Objekten jeweils mindestens zwei Funktransponder angeordnet, wobei die zwei Funktransponder beabstandet zueinander angeordnet sind und die Steuer- und Auswerteeinheit ausgebildet ist, die Positionsdaten der Funktransponder zyklisch zu vergleichen und zyklisch geprüfte Positionsdaten der Objekte zu bilden.

Die Erfindung stellt sicherheitstechnisch verwendbare Positionsdaten zur Verfügung. Das bedeutet, dass die so gewonnenen Positionsdaten aller Personen und Gefahrenstellen als Grundlage für ein umfassendes, vorausschauendes und produktivitätsoptimierendes Absicherungskonzept verwendet werden können.

Die Positionsverfolgung erfolgt mittels Funkortung. Die Objekte erhalten Funktransponder, über die regelmäßig ein Ortungssignal an die ortsfesten Funkstationen gesendet wird und in der Steuer- und Auswerteeinheit bzw. in einer zentralen Steuerung eine Position bzw. Echtzeitposition des jeweiligen Objekts erzeugt bzw. gebildet wird.

Gemäß der Erfindung sind somit die Positionsinformationen vieler oder aller mobilen Objekte oder mobilen Teilnehmer in einem industriellen Arbeitsumfeld in Echtzeit verfügbar.

Da jeweils mindestens zwei Funktransponder an dem jeweiligen Objekt angeordnet sind, können Fehler in der Ortungsinformation vermieden werden, da nämlich immer die Ortungsinformation von mindestens zwei unabhängigen Funktranspondern zur Verfügung steht. Damit ist die Ortung und das gebildete Positionssignal im Sinne einer funktionalen Sicherheit verwendbar. Damit ist es möglich, fehlerhafte Ortungen aufzudecken und zu vermeiden und die Qualität der Ortsinformation zu verbessern.

Auf der Basis von mehreren bzw. vielen geprüften Positionsdaten bzw. Positionsinformationen kann eine Sicherheitssituation von der Steuer- und Auswerteeinheit bewertet werden. Dadurch bietet dieser bereichsorientierte bzw. raumorientierte Absicherung die Möglichkeit weiterer Risikominderungsmaßnahmen.

Die vorliegende Erfindung ermöglicht es somit auch bei fehleranfälligen Funkortungsinformationen im Betriebsumfeld zu überprüfen, dass diese sicherheitstechnisch im Sinne von Maschinensicherheit verwendbar sind. Dabei wird aufgedeckt, wenn es zu Ortungsfehlern außerhalb eines vorgegebenen Toleranzbereiches kommt, beispielsweise aufgrund von zu schwachen Funksignalen. Eine fehlerhafte Ortungsinformation wird dabei möglichst korrigiert und für die weitere Verwendung nutzbar gemacht. Falls das nicht möglich ist, wird eine Fehlerbeherrschungsmaßnahme eingeleitet, beispielsweise wird der Positionswert als fehlerhaft gekennzeichnet.

Damit werden die vorliegenden Ortungsinformationen, Positionsinformationen bzw. Positionsdaten auf ihre Zuverlässigkeit hin überprüft. Weiter kann den Positionsdaten ein für die Weiterverwendung erforderliches Zuverlässigkeitsmaß zugeordnet werden.

Die bisher übliche Strategie nach dem Stand der Technik, wonach bei Anwesenheit einer Person in einen Gefahrenbereich eine Maschine abgeschaltet oder verlangsamt wird, kann zwar auch gemäß der Erfindung vorgesehen sein, jedoch ist es mit der vorliegenden Erfindung auch möglich eine Abschaltung oder eine unmittelbare Verlangsamung zu vermeiden, da mehr Informationen zur Gesamtsituation und Positionen der Objekte vorliegt.

Die Ortung der Funktransponder erfolgt durch Laufzeitmessungen von Funksignalen, die zyklisch zwischen den Funktranspondern und mehreren festen Funkstationen ausgetauscht werden. Diese Triangulation funktioniert sehr gut, wenn die Signale mit ausreichender Signalstärke und auf geradem bzw. direktem Ausbreitungswege übermittelt werden. Da das nicht immer gegeben sein muss, wird nun ein Quervergleich zwischen den so ermittelten Positionsinformationen der Funktransponder durchgeführt.

Aus sicherheitstechnischen Gründen ist eine redundante Positionsbestimmung mit mindestens zwei Funktranspondern vorgesehen. Da die Funktransponder klein und relativ günstig sind ist diese Fehlerbeherrschungsmaßnahme leicht umzusetzen und im Hinblick auf die Fehlerbeherrschung sehr wirksam.

Grundsätzlich wird fortlaufend die Position beider Funktransponder eines Objekts ermittelt und miteinander verglichen. Durch den Vergleich der Positionen der Funktransponder und insbesondere den Vergleich mit einer bekannten Erwartungshaltung, nämlich dem Abstand der Funktransponder in einem Erwartungsbereich, lassen sich eine Reihe von kritischen Fehlerfällen beherrschen:
Ein Fehler, wonach ein Funktransponder keine Positionsinformationen mehr liefert, wird aufgedeckt und beherrscht. Ein Fehler, wonach die Signale der Funktransponder schlecht sind und mit einem großen systematischen Fehler behaftet sind, wird aufgedeckt und beherrscht. Ein Fehler, wonach eine Synchronisierung der Funktransponder nicht mehr möglich ist, wird aufgedeckt und beherrscht.

Im Sinne der Erfindung wird also für mindestens zwei Funktransponder in einer beabstandeten Anordnung die Positionen mittels Funkortung ermittelt und diese mit der Erwartungshaltung einer bekannten beabstandeten Anordnung verglichen.

Gemäß der Erfindung werden Abfolgeschritte und/oder Prozessschritte der Maschine oder Anlage von der Steuer- und Auswerteeinheit eingelesen.

Dadurch sind der Steuer- und Auswerteeinheit zukünftig geplante Abfolgeschritte und/oder Prozessschritte bekannt und können für eine vorausschauende Reaktion und damit für eine vorausschauende Beeinflussung der Maschine und/oder der mobilen Objekte herangezogen werden.

Die Abfolgeschritte und/oder Prozessschritte liegen dabei beispielsweise in Form von Programmen oder Skripten vor, die von der Steuer- und Auswerteeinheit eingelesen werden können. Beispielsweise handelt es sich bei den Programmen um Programme einer speicherprogrammierbaren Steuerung.

Gemäß der Erfindung werden mindestens eine Auftragsplanung für die Anlage und Zielkoordinaten der mobilen Fahrzeuge von der Steuer- und Auswerteeinheit eingelesen werden.

Dadurch sind der Steuer- und Auswerteeinheit zukünftig geplante Abfolgeschritte und/oder Prozessschritte aufgrund der Auftragsplanung und der Zielkoordinaten der mobilen Objekte bzw. mobilen Fahrzeuge bekannt und können für eine vorausschauende Reaktion und damit für eine vorausschauende Beeinflussung der Maschine und/oder der mobilen Objekte herangezogen werden.

In Weiterbildung de Erfindung weist das Sicherheitssystem eine Datenbank auf, wobei die Datenbank Daten zur Aufenthaltswahrscheinlichkeit der Objekte und zeitlicher und/oder räumlicher Häufigkeitsverteilung der Objekte aufweist.

Gemäß der Weiterbildung der Erfindung können statistische Informationen, die aus der Beobachtung vergangener Abläufe abgeleitet wurden erzeugt und ausgewertet werden.

Beispielsweise sind der Steuer- und Auswerteeinheit häufig gefahrene Routen und weniger häufige gefahrene Routen der mobilen Objekte bekannt, wodurch eine mögliche Gefährdung für Personen besser und mit einer höheren Wahrscheinlichkeit abgeschätzt werden kann. Durch die bekannten Aufenthaltswahrscheinlichkeiten kann eine mögliche Gefährdung für Personen besser und mit einer höheren Wahrscheinlichkeit abgeschätzt werden, da beispielsweise an Punkten mit einer geringen Aufenthaltswahrscheinlichkeit von Personen mobile Objekte bzw. mobile Fahrzeuge mit höheren Geschwindigkeiten fahren können als in Bereichen, in denen sich Personen mit hoher Wahrscheinlichkeit aufhalten werden.

Gemäß der Erfindung wird mittels der Steuer- und Auswerteeinheit ein Produktivitätsmaß der Anlage, der Maschine und/oder der Objekte erfasst.

Zusätzlich zu den bereits genannten Risikokennzahlen wird ein Produktivitätsmaß als Optimierungsparameter definiert. Im einfachsten Fall wird dabei eine akkumulierte Abschaltzeit der produktiven Abläufe oder eine Prozessdurchlaufzeit verwendet. Möglich ist jedoch auch die Verwendung von Durchsatzraten von Fahrstrecken, Energie und/oder Ressourcenverbrauch.

Unter Berücksichtigung einer Randbedingung, dass eine Norm der Risikokennzahl für jede Person immer unter einem Grenzwert liegen muss, welches ein tolerierbares Risiko darstellt, wird das Produktivitätsmaß mit Hilfe der Variation der Trajektorien bzw. Bahnen oder anderer Prozessparameter optimiert. Das kann zum Beispiel mit Variationsansätzen durchgeführt werden oder mit einfachem Testen der verfügbaren Trajektorien und Prozessparameter. Primäre Optimierungsgröße ist die Produktivität.

Zusätzlich kann auch die Risikokennzahl selbst in eine Optimierung mit einfließen, um das Gesamtrisiko zu mindern. Interessant ist dies zum Beispiel, wenn es mehrere alternative Trajektorien gibt, die in einer vergleichbaren Produktivität resultieren, etwa wenn ein mobiles Objekt zwei Möglichkeiten hat einen Zielpunkt zu erreichen, wobei beispielsweise bei einer ersten Route das mobile Objekt in die Nähe einer einzigen Person kommt und bei der zweiten alternativen Route das mobile Objekt in die Nähe mehrerer Personen kommt. Hier ist auf der ersten Route das Gesamtrisiko niedriger als auf der zweiten Route mit mehr Personen, die gefährdet werden können.

Entscheidend ist dabei, dass die Trajektorien der einzelnen Teilnehmer nicht rückwirkungsfrei sind, d. h. Einfluss auf die Risikokennzahl anderer Personen haben können. Die Optimierung erfolgt daher sinnvoll im Gesamtsystem.

In Weiterbildung der Erfindung werden mittels mindestens einer Anzeigeeinheit Warnhinweise an die Personen ausgegeben.

Ein verbesserter Systemzustand wird durch Hinweise bzw. Weisungen mittels der Anzeigeeinheit erreicht.

So kann mittels einer Anzeigeeinheit für einen Bereich beispielsweise dynamisch angezeigt werden, ob in diesem Bereich ein Aufenthalt von Personen erlaubt ist oder nicht. Weiter kann mittels der Anzeigeeinheit beispielsweise für Personen empfohlene Routen angezeigt werden, bzw. vor nicht empfohlenen Routen gewarnt werden.

Gemäß der Erfindung ist die Steuer- und Auswerteinheit ausgebildet, die Maschine und/oder das mobiles Fahrzeug zu steuern und damit zu beeinflussen.

Der optimale Systemzustand wird durch eine Steuerung von Maschinen und Prozessabläufen erreicht.

Die Wirksamkeit der verschiedenen Einwirkungen und ihr Einfluss auf die Produktivität sind dabei unterschiedlich und werden für eine Priorisierung der Maßnahmen verwendet. Zum Beispiel muss damit gerechnet werden, dass eine Warnung an eine Person oder die Anweisung einen alternativen Weg einzuschlagen, von Personen ignoriert wird. Bei unmittelbar drohender Gefährdung wird daher auf die sehr viel zuverlässigeren Steuerungen der Maschinen zurückgegriffen, z. B. ein Verlangsamen der Maschine oder ein Notstopp der Maschine.

Zu jedem Zeitpunkt wird dabei aus der Beobachtung der zeitlichen Entwicklung des Sicherheitssystems bewertet, ob das Sicherheitssystem optimiert wird und ob die Zwangsbedingungen, wonach ein Risiko tolerierbar ist, eingehalten werden. Diese Bewertung fließt als Feedback in die Auswahl der Steuerungsmaßnahmen ein.

Folgende Möglichkeiten sind beispielsweise zur Einwirkung vorgesehen.
- ein Notstopp einer Maschine oder eines beweglichen Objekts bzw. Fahrzeugs,
- eine Verlangsamung einer Maschine oder eines beweglichen Objekts bzw. Fahrzeugs,
- eine Änderung einer Pfadplanung einer Person oder eines beweglichen Objekts bzw. Fahrzeugs
- Warnungen an eine Person
- Anweisungen an eine Person, z. B. Hinweise auf einen alternativen Laufweg.

Folgende Möglichkeit ist zur Einwirkung vorgesehen.
- Änderung einer Reihenfolge einzelner Prozessschritte eines Automatisierungsablaufs.

In Weiterbildung der Erfindung werden aufgrund der detektierten Signalstärken der Funksignale der Funktransponder und aus dem Vergleich der Positionsdaten der Funktransponder Plausibilitätswerte gebildet.

Als Ergebnis der Konsistenzüberprüfung wird ein Plausibilitätsmaß abgeleitet, das in die weitere Verwendung der Positionsdaten bzw. der Positionsinformationen einfließt. Ein Positionswert, der durch verschiedene unabhängige Quellen mit einem geringen Relativitätsfehler bestätigt wird, erhält dabei einen sehr hohen Plausibilitätswert. Wenn es hingegen zu großen Abweichungen der unabhängigen Messungen voneinander kommt oder Messwerte fehlen oder unplausibel sind, dann wird diesen Messungen ein niedriger Plausibilitätswert zugeordnet.

Dabei wird geprüft, ob die gemessenen Positionen im Rahmen einer vorgegebenen Toleranz mit einer bekannten Konfiguration übereinstimmen, oder ob es signifikante Abweichungen gibt. Je nach Grad der Übereinstimmung wird eine Plausibilitätskennzahl der Funkortung für diesen Messzyklus gesetzt. Ein hoher Plausibilitätswert bedeutet daher gute Übereinstimmung zwischen Erwartung und Messung, während ein kleiner Plausibilitätswert eine fehlerhafte Messung signalisiert. Diese Plausibilitätszahl kann als "safety-related confidence information" gemäß IEC62998-1 für die Weiterverarbeitung in einer sicherheits-relevanten Funktion zum Einsatz kommen.

In Weiterbildung der Erfindung sind die Abstände zwischen den Funktranspondern der Steuer- und Auswerteeinheit bekannt und sind in einem Speicher der Steuer und Auswerteeinheit abgespeichert.

Dadurch ist es möglich, verschiedene Objekte mit individuellen Abständen der Funktransponder einzulernen und diese abzuspeichern, so dass das Sicherheitssystem abgespeicherte Objekte identifizieren kann und von nicht abgespeicherten Objekten unterscheiden kann.

In Weiterbildung der Erfindung variieren die Abstände zwischen den Funktranspondern bei einer Person aufgrund der Bewegung der Person oder sind veränderlich.

Dadurch ändert sich der Abstand von mindestens zwei Funktranspondern sobald sich die Person bewegt, wodurch die Positionserfassung der Funktransponder dynamisiert wird und dadurch testbar wird, wodurch Fehler in der Positionserfassung und in der Erfassung der Orientierung vermieden werden. Beispielsweise ändert sich der Abstand von zwei Funktranspondern, die jeweils an den Schultern einer Person angeordnet sind geringfügig beim Gehen der Person, da sich die Position der Schulterblätter leicht verändert.

Die Abstände der Funktransponder sind damit veränderlich, wobei auch hier der veränderliche Abstand bekannt ist. Dabei kann der Abstand beispielsweise gemessen, insbesondere zyklisch gemessen werden.

In Weiterbildung der Erfindung sind mindestens drei Funktransponder angeordnet, wobei die Steuer- und Auswerteeinheit ausgebildet ist, aus den Positionsdaten der Funktransponder Orientierungsdaten des Objektes zu bilden.

Beispielsweise sind zwei Funktransponder an den Schultern einer Weste einer Person angeordnet. Beispielsweise ist ein weiterer Transponder an einem Helm der Person angeordnet.

Dadurch liegt sicherheitstechnisch vorteilhaft ein überbestimmtes System vor. Selbst wenn ein Funktransponder ausfallen sollte bzw. dessen Funksignale nicht erfassbar wären, verbleiben immer noch zwei Funktransponder die redundant ausgewertet werden können. Dadurch liegt ein hoch verfügbares Sicherheitssystem vor.

In Weiterbildung der Erfindung sind mindestens vier, mindestens sechs oder mindestens acht Funktransponder an dem Objekt angeordnet, wobei jeweils zwei Funktransponder auf jeweils einer Geraden liegen, wobei die Geraden jeweils in einem Winkel von 90° +/-15°, insbesondere senkrecht zueinander sind.

Dadurch sind Funktransponder jeweils paarweise angeordnet, wobei die jeweiligen Paare jeweils eine unterschiedliche Orientierung aufweisen. Dadurch ist eine Orientierungsbestimmung aus jeder Richtung eindeutig. Weiter kann auch im Kreuzungspunkt der Geraden ein Funktransponder angeordnet sein, so dass ein einzelner Funktransponder einen Mittelpunkt bzw. einen zentralen Positionspunkt bildet, welcher als Referenzposition herangezogen werden kann.

In Weiterbildung der Erfindung weisen die Funktransponder jeweils mindestens eine Zeitmesseinheit auf, wobei die Funkstationen ebenfalls jeweils mindestens eine Zeitmesseinheit aufweisen, wobei die Funkstationen ausgebildet sind, die Zeiten der Zeitmesseinheiten der Funktransponder auszulesen und/oder zu beschreiben und die Funkstationen ausgebildet sind, die Zeiten der Zeitmesseinheiten der Funktransponder zu synchronisieren und/oder die Funkstationen ausgebildet sind, die Zeiten der Zeitmesseinheiten der Funktransponder mit den Zeiten der Zeitmesseinheiten der Funkstationen zu vergleichen.

Dadurch ist eine präzisiere Positionsbestimmung möglich, welche durch die Synchronisation auch dauerhaft präzise durchgeführt werden kann, insbesondere bei sich bewegenden Objekten.

In Weiterbildung der Erfindung weist das Sicherheitssystem optische Sensoren auf zur Ortung und Detektion der Objekte.

Die Positionsdaten bzw. Positionsinformationen können mit sicheren oder nicht-sicheren Positionsdaten bzw. Positionsinformationen, die punktuell an bestimmten Orten im Betriebsumfeld mit Hilfe optischer Sensoren erfasst wurden, verglichen werden.

Ein Beispiel ist der Abgleich mit den Positionsdaten, die im Sichtbereich eines optischen Sensors, beispielsweise einer 3D-Kamera ermittelt wurden. Das kann zum Beispiel in einem Kreuzungsbereich sein. Hierbei wird bei Erfassung eines Objekts im Sichtbereich die Position relativ zur 3D-Kamera ermittelt und mit der bekannten Position der 3D-Kamera die globale Position des Objekts abgeleitet. Dabei sind sowohl statisch angebrachte optische Sensoren als auch mobile optische Sensoren, deren Position und Orientierung durch andere Quellen bekannt ist, vorgesehen. Anschließend wird geprüft, ob sich in einer Liste der mittels Funkortung verfolgten Objekte ein Objekt befindet, dass zu diesem Positionswert passt. Bei hinreichender Übereinstimmung gilt der Positionswert der Funkortung als geprüft. In diesem Fall hat ein diversitär redundanter Ansatz die Messung bestätigt.

Die optischen Positionsdaten haben üblicherweise eine bessere Genauigkeit und können zusätzlich dazu benutzt werden, die Positionsgenauigkeit der Person oder der mobilen Maschine zu verbessern.

Die Plausibilität eines Positionswertes ist also umso größer, je besser die Übereinstimmung zwischen optischer Positionsbestimmung und Funkortung ist und je eindeutiger auch die Zuordnung zwischen optischer Positionsbestimmung und Funkortung möglich ist. Im oben dargestellten Fall kann die zusätzliche Schwierigkeit beispielsweise darin bestehen, dass nicht sicher festgestellt werden kann, ob eine erste Funkortung nicht möglicherweise auch zur einer zweiten optischen Ortung gehört und umgekehrt. Solche Mehrdeutigkeiten werden in der Plausibilität berücksichtigt. Diese Berücksichtigung kann dadurch erfolgen, dass die Zuordnung sicherheitsgerichtet so vorgenommen wird, dass eine minimale Abweichung zwischen Funkortung und optischer Position resultiert. Sie kann alternativ auch dadurch erfolgen, dass vorangegangene Positionswerte getrackt werden und die Zuordnung so gemacht wird, dass der Abstand zur vorangegangenen Messung minimiert wird.

In Weiterbildung der Erfindung weist das Sicherheitssystem Radarsensoren auf zur Ortung und Detektion der Objekte.

Die Positionsdaten bzw. Positionsinformationen können mit sicheren oder nicht-sicheren Positionsdaten bzw. Positionsinformationen, die punktuell an bestimmten Orten im Betriebsumfeld mit Hilfe von Radarsensoren erfasst wurden, verglichen werden.

Ein Beispiel ist der Abgleich mit den Positionsdaten, die im Sichtbereich eines Radarsensors, beispielsweise eines Flächenradarsensors ermittelt wurden. Das kann zum Beispiel in einem Kreuzungsbereich sein. Hierbei wird bei Erfassung eines Objekts im Sichtbereich die Position relativ zum Radarsensor ermittelt und mit der bekannten Position des Radarsensors die globale Position des Objekts abgeleitet. Dabei sind sowohl statisch angebrachte Radarsensoren als auch mobile Radarsensoren, deren Position und Orientierung durch andere Quellen bekannt ist, vorgesehen. Anschließend wird geprüft, ob sich in einer Liste der mittels Funkortung verfolgten Objekte ein Objekt befindet, dass zu diesem Positionswert bzw. zu diesen Positionsdaten passt. Bei hinreichender Übereinstimmung gilt der Positionswert der Funkortung als geprüft. In diesem Fall hat ein diversitär redundanter Ansatz die Messung bestätigt.

Die Positionsdaten der Radarsensoren haben üblicherweise eine höhere Reichweite und können zusätzlich dazu benutzt werden, die Positionsgenauigkeit der Person oder der mobilen Maschine zu verbessern.

Die Plausibilität eines Positionswertes ist also umso größer, je besser die Übereinstimmung zwischen optischer Positionsbestimmung und Funkortung ist und je eindeutiger auch die Zuordnung zwischen der Radar-Positionsbestimmung und Funkortung möglich ist. Im oben dargestellten Fall kann die zusätzliche Schwierigkeit beispielsweise darin bestehen, dass nicht sicher festgestellt werden kann, ob eine erste Funkortung nicht möglicherweise auch zur einer zweiten Radar-Ortung gehört und umgekehrt. Solche Mehrdeutigkeiten werden in der Plausibilität berücksichtigt. Diese Berücksichtigung kann dadurch erfolgen, dass die Zuordnung sicherheitsgerichtet so vorgenommen wird, dass eine minimale Abweichung zwischen Funkortung und Radarortung resultiert. Sie kann alternativ auch dadurch erfolgen, dass vorangegangene Positionswerte getrackt werden und die Zuordnung so gemacht wird, dass der Abstand zur vorangegangenen Messung minimiert wird.

In Weiterbildung der Erfindung weist das Sicherheitssystem RFID-Sensoren auf zur Ortung und Detektion der Objekte.

Die Positionsdaten bzw. Positionsinformationen können mit sicheren oder nicht-sicheren Positionsdaten bzw. Positionsinformationen, die punktuell an bestimmten Orten im Betriebsumfeld mit Hilfe von RFID-Sensoren erfasst wurden, verglichen werden.

Ein Beispiel ist der Abgleich mit den Positionsdaten, die im Sichtbereich eines RFID-Sensoren ermittelt wurden. Das kann zum Beispiel in einem Kreuzungsbereich sein. Hierbei wird bei Erfassung eines Objekts im Sichtbereich die Position relativ zum RFID-Sensor ermittelt und mit der bekannten Position des RFID-Sensors die globale Position des Objekts abgeleitet. Dabei sind sowohl statisch angebrachte RFID-Sensoren als auch mobile RFID-Sensoren, deren Position und Orientierung durch andere Quellen bekannt ist, vorgesehen. Anschließend wird geprüft, ob sich in einer Liste der mittels Funkortung verfolgten Objekte ein Objekt befindet, das zu diesem Positionswert passt. Bei hinreichender Übereinstimmung gilt der Positionswert der Funkortung als geprüft. In diesem Fall hat ein diversitär redundanter Ansatz die Messung bestätigt.

Die Positionsdaten der RFID-Sensoren haben üblicherweise eine ähnliche Genauigkeit und können zusätzlich dazu benutzt werden, die Positionsgenauigkeit der Person oder der mobilen Maschine zu verbessern.

Die Plausibilität eines Positionswertes ist also umso größer, je besser die Übereinstimmung zwischen optischer Positionsbestimmung und Funkortung ist und je eindeutiger auch die Zuordnung zwischen RFID-Sensor-Positionsbestimmung und Funkortung möglich ist. Im oben dargestellten Fall kann die zusätzliche Schwierigkeit beispielsweise darin bestehen, dass nicht sicher festgestellt werden kann, ob eine erste Funkortung nicht möglicherweise auch zur einer zweiten Ortung mittels RFID-Sensor gehört und umgekehrt. Solche Mehrdeutigkeiten werden in der Plausibilität berücksichtigt. Diese Berücksichtigung kann dadurch erfolgen, dass die Zuordnung sicherheitsgerichtet so vorgenommen wird, dass eine minimale Abweichung zwischen Funkortung und RFID-Sensor Position resultiert. Sie kann alternativ auch dadurch erfolgen, dass vorangegangene Positionswerte getrackt werden und die Zuordnung so gemacht wird, dass der Abstand zur vorangegangenen Messung minimiert wird.

In Weiterbildung der Erfindung weist das Sicherheitssystem Ultraschallsensoren auf zur Ortung und Detektion der Objekte.

Die Positionsdaten bzw. können mit sicheren oder nicht-sicheren Positionsdaten bzw. Positionsinformationen, die punktuell an bestimmten Orten im Betriebsumfeld mit Hilfe Ultraschallsensoren erfasst wurden, verglichen werden.

Ein Beispiel ist der Abgleich mit den Positionsdaten, die im Sichtbereich eines Ultraschallsensors, beispielsweise eines Ultraschallflächensensors ermittelt wurden. Das kann zum Beispiel in einem Kreuzungsbereich sein. Hierbei wird bei Erfassung eines Objekts im Sichtbereich die Position relativ zum Ultraschallsensor ermittelt und mit der bekannten Position des Ultraschallsensors die globale Position des Objekts abgeleitet. Dabei sind sowohl statisch angebrachte Ultraschallsensoren als auch mobile Ultraschallsensoren, deren Position und Orientierung durch andere Quellen bekannt ist, vorgesehen. Anschließend wird geprüft, ob sich in einer Liste der mittels Funkortung verfolgten Objekte ein Objekt befindet, das zu diesem Positionswert passt. Bei hinreichender Übereinstimmung gilt der Positionswert der Funkortung als geprüft. In diesem Fall hat ein diversitär redundanter Ansatz die Messung bestätigt.

Die Ultraschallsensoren haben üblicherweise eine ähnliche Genauigkeit und können zusätzlich dazu benutzt werden, die Positionsgenauigkeit der Person oder der mobilen Maschine zu verbessern.

Die Plausibilität eines Positionswertes ist also umso größer, je besser die Übereinstimmung zwischen Ultraschallsensoren-Positionsbestimmung und Funkortung ist und je eindeutiger auch die Zuordnung zwischen Ultraschallpositionsbestimmung und Funkortung möglich ist. Im oben dargestellten Fall kann die zusätzliche Schwierigkeit beispielsweise darin bestehen, dass nicht sicher festgestellt werden kann, ob eine erste Funkortung nicht möglicherweise auch zur einer zweiten Ultraschall-Ortung gehört und umgekehrt. Solche Mehrdeutigkeiten werden in der Plausibilität berücksichtigt. Diese Berücksichtigung kann dadurch erfolgen, dass die Zuordnung sicherheitsgerichtet so vorgenommen wird, dass eine minimale Abweichung zwischen Funkortung und optischer Position resultiert. Sie kann alternativ auch dadurch erfolgen, dass vorangegangene Positionswerte getrackt werden und die Zuordnung so gemacht wird, dass der Abstand zur vorangegangenen Messung minimiert wird.

Gemäß der Erfindung ist das Funkortungssystem ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20% der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf. Vorzugsweise ist eine Vielzahl, beispielsweise mehr als drei Funkstationen angeordnet, welche mindestens einen Teil des Bewegungsbereichs der Person oder des Objektes überwachen.

In Weiterbildung der Erfindung erfolgt aufgrund der geprüften Positionsdaten mittels der Steuer- und Auswerteeinheit eine Veränderung der Sicherheitsfunktion des Sicherheitssystems.

Basierend auf Positionsdaten mittels der Steuer- und Auswerteeinheit erfolgt eine Veränderung der Sicherheitsfunktion des Sicherheitssystems.

Wenn eine vorbestimmte Position erkannt ist, welche beispielsweise abgespeichert ist, kann die Steuer- und Auswerteeinheit auf eine andere Schutzmaßnahme bzw. Sicherheitsfunktion umschalten. Das Umschalten der Schutzmaßnahme kann beispielsweise ein Umschalten von Messdatenkonturen, ein Umschalten von Schutzfeldern, eine Größen- oder Formanpassung von Messdatenkonturen oder Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

In Weiterbildung der Erfindung erfolgt aufgrund der geprüften Positionsdaten mittels der Steuer- und Auswerteeinheit eine Änderung einer Reihenfolge von Prozessschritten eines Automatisierungsablaufs einer Anlage.

In Weiterbildung der Erfindung werden mittels der Steuer- und Auswerteeinheit geprüften Positionsdaten mit gespeicherten Positionsdaten eines Sicherheitspunktes auf Übereinstimmung geprüft.

An bestimmten Überwachungsstellen, die sowohl beispielsweise optisch ermittelte Positionsinformationen als auch durch Funkortung ermittelte Positionsinformationen liefern, kann zudem optional eine Überprüfung der Funkortung in dem Sinne durchgeführt werden, dass geprüft wird, ob für ein detektiertes Objekt überhaupt eine Funkortung erfolgt ist. So eine Bestätigung kann die sicherheitskritischen Fehlerfälle eines fehlenden oder nicht funktionierenden Tags aufdecken und die Anforderungen an eine zyklische Prüfung im Sinne der Norm ISO 13849-1 erfüllen.

Der Vergleich mit unabhängigen Positionsdaten kann auch an bekannten Interaktionspunkten erfolgen. Zum Beispiel bei Betätigung eines Schalters oder beim überwachten Durchtritt durch eine Tür. In diesem Moment ist die Position des Bedieners sehr genau bekannt und kann für eine Validierung der Positionsdaten bzw. der Positionsinformation genutzt werden. Entsprechendes ist auch bei autonomen Fahrzeugen möglich. Beim Andocken in einer Ladestation oder bei der Ankunft an Übergabestationen ist die Position sehr genau bekannt und kann zur Überprüfung der Funkortung und sicherheitstechnischen Fehlerbeherrschung verwendet werden.

Weiter ist ein Vergleich von Funkortungen, die mit Hilfe unabhängiger oder unterschiedlicher Teilmengen der verfügbaren Funkstationen bzw. Ankerpunkte ermittelt wurden, möglich.

Das Verfahren macht sich zu Nutze, dass für die Bestimmung der Position in der Regel nicht alle Funkstationen bzw. Ankerpunkte benötigt werden und damit eine Plausibilisierung aus den Messdaten selbst möglich ist, indem dieselbe Ortungsaufgabe von zwei unterschiedlichen Untergruppen der stationären Funkstationen durchgeführt wird. Hier wird wie beim Vergleich unabhängiger Messungen verschiedener Funktransponder ein Quervergleich mit der Erwartungshaltung der Übereinstimmung geprüft.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
Figuren 1 bis 3 und Figuren 7 und 8 jeweils ein Sicherheitssystem zur Lokalisierung von mindestens zwei Objekten;
Figuren 4 bis 6 jeweils mehrere Funktransponder an einem Objekt.

In den nachfolgenden Figuren sind identische Teile mit identischen Bezugszeichen versehen.

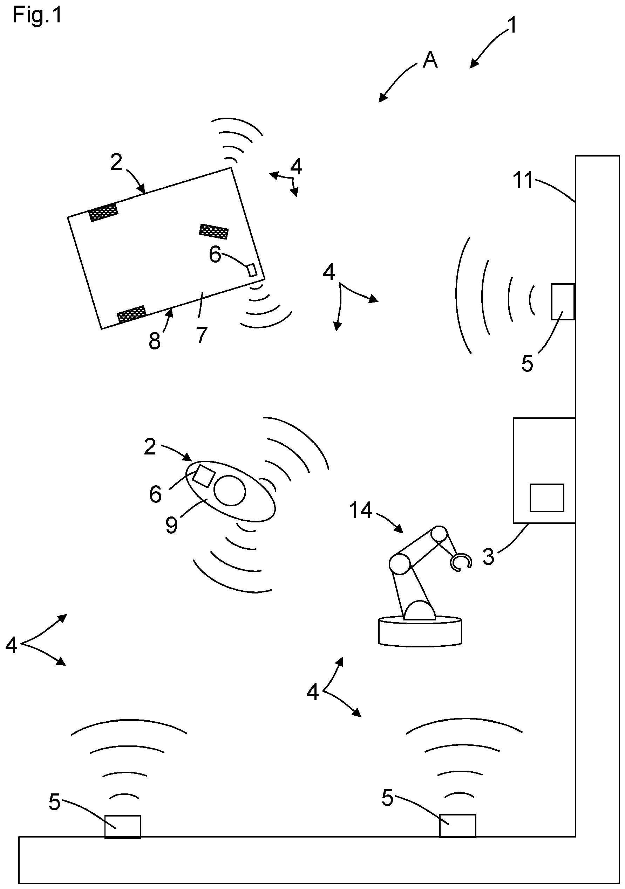

Figur 1 zeigt ein Sicherheitssystem 1 zur Lokalisierung von mindestens zwei ortsveränderlichen Objekten 2, mit mindestens einer Steuer- und Auswerteeinheit 3, mit mindestens einem Funkortungssystem 4, wobei das Funkortungssystem 4 mindestens drei angeordnete Funkstationen 5 aufweist, wobei an den Objekten 2 jeweils mindestens ein Funktransponder 6 angeordnet ist, wobei mittels dem Funkortungssystem 4 Positionsdaten des Funktransponders 6 und damit Positionsdaten der Objekte 2 ermittelbar sind, wobei die Positionsdaten von der Funkstation 5 des Funkortungssystems 4 an die Steuer- und Auswerteeinheit 3 übermittelbar sind, und/oder die Positionsdaten von dem Funktransponder 6 an die Steuer- und Auswerteeinheit 3 übermittelbar sind, wobei die Steuer- und Auswerteeinheit 3 ausgebildet ist, die Positionsdaten der Funktransponder 6 zyklisch zu erfassen, wobei die Funktransponder6 eine Identifikation aufweisen, wobei jeweils ein Funktransponder 6 jeweils einem Objekt 2 zugeordnet ist, wodurch die Steuer- und Auswerteeinheit 3 ausgebildet ist, die Objekte 2 zu unterscheiden, wobei die Steuer- und Auswerteeinheit 3 ausgebildet ist, jedem Objekt 2 eine Risikokennzahl zuzuordnen, mindestens abhängig von der Position des Objekts 2 zu einem anderen Objekt 2.

Figur 1 zeigt ebenfalls ein Sicherheitssystem 1 zur Lokalisierung von mindestens zwei ortsveränderlichen Objekten 2, mit mindestens einer Steuer- und Auswerteeinheit 3, mit mindestens einem Funkortungssystem 4, wobei das Funkortungssystem 4 mindestens drei angeordnete Funkstationen 5 aufweist, wobei an den Objekten 2 jeweils mindestens ein Funktransponder 6 angeordnet ist, wobei mittels dem Funkortungssystem 4 Positionsdaten des Funktransponders 6 und damit Positionsdaten der Objekte 2 ermittelbar sind, wobei die Positionsdaten von der Funkstation 5 des Funkortungssystems 4 an die Steuer- und Auswerteeinheit 3 übermittelbar sind, und/oder die Positionsdaten von dem Funktransponder 6 an die Steuer- und Auswerteeinheit 3 übermittelbar sind, wobei die Steuer- und Auswerteeinheit 3 ausgebildet ist, die Positionsdaten der Funktransponder 6 zyklisch zu erfassen, wobei erste Objekte 2 Personen 9 sind und zweite Objekte 2 mobile Objekte 7 bzw. mobile Fahrzeuge 8 sind, wobei die Funktransponder 6 eine Identifikation aufweisen, wobei jeweils ein Funktransponder 6 mindestens entweder einer Person 9 oder einem mobilen Objekt 7 zugeordnet ist, wodurch die Steuer- und Auswerteeinheit 3 ausgebildet ist, die Personen 9 und mobilen Objekte 7 zu unterscheiden, wobei die Steuer- und Auswerteeinheit 3 ausgebildet ist, jeder Person 9 eine Risikokennzahl zuzuordnen, mindestens abhängig von der Position der Person 7 zu mindestens einem mobilen Objekt.

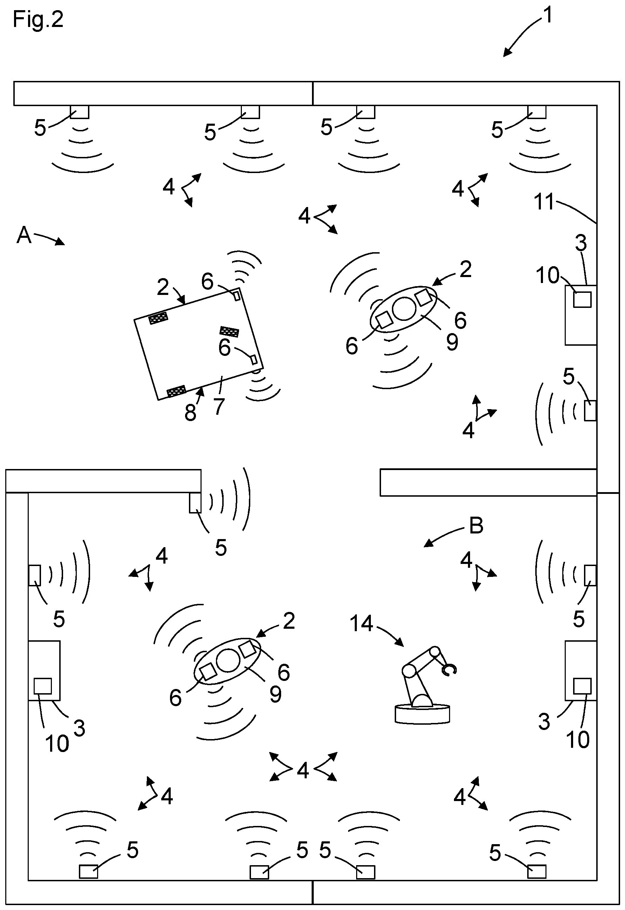

Figur 2 zeigt zwei Bereiche A und B, die über einen Durchgang miteinander verbunden sind und mittels Begrenzungen oder Wänden 11 miteinander verbunden sind.

Gemäß Figur 2 ist eine Absicherung über größere Bereiche A und B, also beispielsweise von vielen Arbeitsstationen, von vielen Robotern oder beispielsweise von ganzen Produktionshallen möglich, da nicht nur eine lokale Anwesenheit oder Annäherung von Personen 9 detektiert wird, sondern eine Position vieler in einem Umfeld oder Bereich A, B aktiven Personen 9 und mobilen Maschinen 8 detektierbar ist und fortlaufend verfolgt werden kann. Hierzu ist beispielsweise eine Vielzahl von Funkstationen 5 vorgesehen.

Gemäß Figur 2 ist eine Absicherung über größere Bereiche A und B, also beispielsweise von vielen Maschinen 14, von Arbeitsstationen und/oder von vielen Robotern oder beispielsweise gar von ganzen Produktionshallen möglich, da nicht nur eine lokale Anwesenheit oder Annäherung von Personen 9 detektiert wird, sondern eine Position vieler in einem Umfeld oder Bereich A, B aktiven Personen 9 und mobilen Objekten 2 bzw. mobilen Objekten 7 detektierbar ist und fortlaufend verfolgt werden kann.

Gemäß Figur 2 können mögliche zukünftige Gefährdungen sehr viel frühzeitiger aufgedeckt werden, da die Steuer- und Auswerteeinheit 3 bzw. das Sicherheitssystem 1 die Positionen von vielen Objekten 2 gleichzeitig kennt und deren zyklischen zeitlichen Verlauf ebenfalls kennt. Dadurch können durch das Sicherheitssystem 1 Maßnahmen zur Risikominderung durchgeführt werden, die sehr viel weniger invasiv in die Automatisierungsabläufe eingreifen und die Produktivität weniger stören.

Gemäß Figur 2 werden sicherheitstechnisch verwendbare Positionsdaten zur Verfügung gestellt. Das bedeutet, dass die so gewonnenen Positionsdaten aller Personen 9 und Gefahrenstellen als Grundlage für ein umfassendes, vorausschauendes und produktivitätsoptimierendes Absicherungskonzept verwendet werden können.

Die Positionsverfolgung erfolgt mittels Funkortung. Die Objekte 2 erhalten Funktransponder 6, über die regelmäßig ein Ortungssignal an die ortsfesten Funkstationen 5 gesendet wird und in der Steuer- und Auswerteeinheit 3 bzw. in einer zentralen Steuerung eine Position bzw. Echtzeitposition des jeweiligen Objekts 2 erzeugt bzw. gebildet wird.

Gemäß Figur 2 sind somit die Positionsinformationen vieler oder aller mobilen Objekte 2 und ortsfester Objekte 2 wie beispielsweise von Maschinen 14 oder mobilen Teilnehmer in einem industriellen Arbeitsumfeld in Echtzeit verfügbar.

Die Ortung der Funktransponder 6 erfolgt durch Laufzeitmessungen von Funksignalen, die zyklisch zwischen den Funktranspondern 6 und mehreren festen Funkstationen 5 ausgetauscht werden. Diese Triangulation funktioniert sehr gut, wenn die Signale mit ausreichender Signalstärke und auf geradem bzw. direktem Ausbreitungswege übermittelt werden.

Gemäß einer ersten Alternative der Erfindung werden die Signale eines Funktransponders 6 von mehreren ortsfesten Funkstationen 5 bzw. Ankerstationen empfangen und über eine Laufzeitvermessung z B. Time of arrival' (TOA) oder z.B. Time Difference of Arrival' (TDOA) die Grundlage für die Ortung geschaffen. Die Berechnung bzw. Schätzung der Position eines Funktransponders 6 geschieht dann auf der Steuer- und Auswerteeinheit 3 beispielsweise einem zentralen RTLS-Server (Real-Time-Location-System-Server), der über eine drahtlose oder drahtgebundene Datenverbindung an alle Funkstationen bzw. Ankerstationen angeschlossen ist. Diesen Modus der Ortung nennt man RTLS-Modus (Real-Time-Location-System-Modus).

Alternativ kann die Positionsinformation jedoch auch auf jedem Funktransponder 6 ermittelt werden. In diesem Fall arbeitet das Sicherheitssystem 1 vergleichbar mit dem GPS-Navigationssystem. Jeder Funktransponder 6 empfängt die Signale der Funkstationen 5 bzw. Ankerstationen, die in einem festen zeitlichen Bezug zueinander ausgesendet werden. Auch hier kann über die verschiedenen Laufzeitmessungen und die Kenntnis der Funkstationspositionen bzw. Ankerpositionen eine Positionsschätzung des Funktransponders 6 vorgenommen werden. Der Funktransponder 6 selbst berechnet seine Position und kann diese bei Bedarf mit Hilfe des UWB-Signals oder anderer drahtloser Datenverbindungen an den RTLS-Server übertragen.

Gemäß Figur 2 sind Maßnahmen zur Risikominderung möglich, die eine deeskalierende Abfolge von Maßnahmen ermöglichen, die ihre Wirksamkeit aufgrund längerer Vorlaufzeit besser entfalten und die die Einwirkung auf das Verhalten der beteiligten Personen 9 mit einbeziehen.

Die hier verwendete Risikominderung verwendet als Eingangsinformationen vorzugsweise die Positionsinformationen aller Objekte 2, also aller Personen 9 und mobilen Objekte 2, in der Regel mobile Fahrzeuge und beispielsweise zugehörige Genauigkeitsinformationen.

Gemäß Figur 2 werden Informationen zum Betriebsumfeld, wie zum Beispiel die Kenntnis über zugängliche Bereiche, beispielsweise Fahrwege der mobilen Objekte 7 und die Positionen der Gefahrstellen der Maschinen 14 berücksichtigt.

Bei dem beweglichen Objekt 7, einer bewegbaren Maschine bzw. mobilen Maschine kann es sich beispielsweise um ein führerloses Fahrzeug, fahrerloses Fahrzeug bzw. autonomes Fahrzeug, um ein autonom geführtes Fahrzeug (Autonomous Guided Vehicles, AGV), um einen automatisch mobilen Roboter (Automated Mobile Robots, AMR), um einen industriemobilen Roboter (Industrial Mobile Robots, IMR) oder um einen Roboter mit bewegbaren Roboterarmen handeln. Die mobile Maschine weist somit einen Antrieb auf und kann in verschiedenen Richtungen bewegt werden.

Bei der Person 9 kann es sich beispielsweise um eine Bedienperson oder Wartungsperson handeln. Die Funktransponder 6 sind beispielsweise an der Kleidung oder einer Ausrüstung der Person 9 angeordnet. Dabei kann es sich beispielsweise um eine Weste handeln, an der die Funktransponder 6 fest fixiert sind. Die Funktransponder 6 sind beispielsweise an den Schultern und im Brust- oder Rückenbereich angeordnet. Jedoch können die Funktransponder 6 auch an anderen Stellen der Person 9 angeordnet sein. Beispielsweise sind zwei Funktransponder 6 an den Schultern einer Weste einer Person 9 angeordnet.

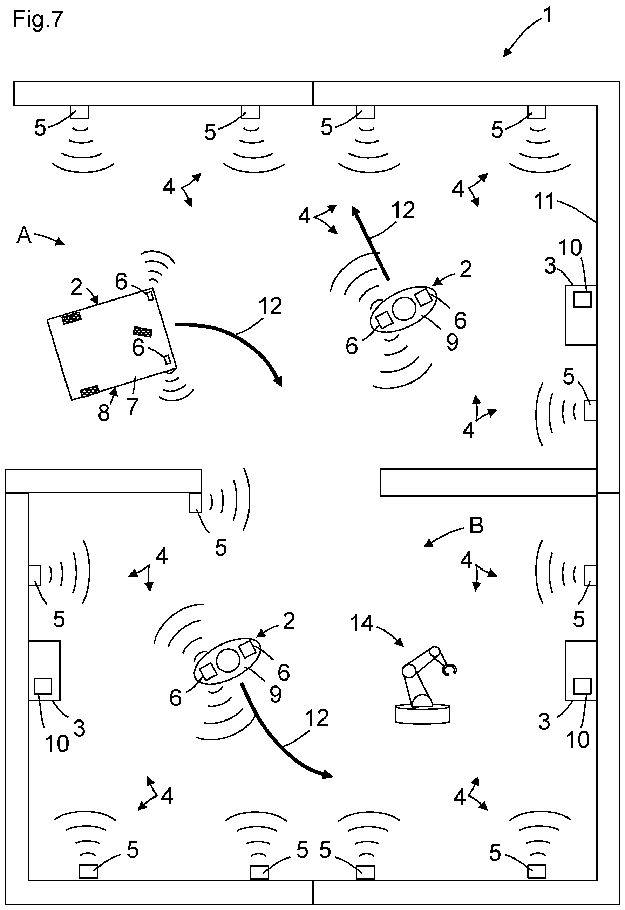

Gemäß Figur 7 ist die Steuer- und Auswerteeinheit 3 ausgebildet, jeweils eine Position der Funktransponder 6 zu unterschiedlichen Zeitpunkten zu ermitteln und daraus eine Geschwindigkeit, eine Beschleunigung, eine Bewegungsrichtung und/oder mindestens eine Bahn (Trajektorie) der Funktransponder 6 bzw. der mobilen Objekte 7 und Personen 9 zu bestimmen.

Gemäß Figur 7 werden vorzugsweise die Geschwindigkeiten und Bewegungsrichtungen aller Personen 9 und mobilen Objekte 7 berücksichtigt.

Die Positionsinformationen dienen zur Berechnung wahrscheinlicher Bewegungsverläufe bzw. Trajektorien aller Objekte 2, also den Personen 9 oder mobilen Objekten 7.

Zu jeder Person 9 und jedem mobilen Objekt 7 wird mit Hilfe der Positionsinformationen eine Schar von Bewegungsverläufen ermittelt und beispielsweise mit einem Wahrscheinlichkeitsmaß versehen. Das Wahrscheinlichkeitsmaß wird dabei beispielsweise auf Grundlage der Weglänge und/oder Bewegungsrichtung abgeschätzt. So sind beispielsweise kurze direkte Wege wahrscheinlicher als lange nicht direkte Wege. Weiter kann das Wahrscheinlichkeitsmaß auf Grundlage einer bekannten Historie von Wegstrecken der Objekte 2 abgeschätzt werden. So sind beispielsweise Wege, die in der Vergangenheit häufig genutzt wurden, wahrscheinlicher als neue Wegrouten. Weiter kann das Wahrscheinlichkeitsmaß auf der Grundlage von bekannten Störungen abgeschätzt werden. So wird eine gestörte mögliche Route wahrscheinlicher vermieden als eine ungestörte Route.

Aus einer Schar möglicher Trajektorien und der ihnen zugeordneten Wahrscheinlichkeiten wird für jede Person 9 und jedes mobile Objekt 7 bzw. jedes Fahrzeug die wahrscheinlichste Bahn, Route bzw. Trajektorie ausgewählt.

Einer für jede von N Personen 9 ausgewählten Trajektorie wird für jede von M Gefahrstellen eine zeitabhängige Risikokennzahl zugewiesen, die den Abstand bzw. zeitabhängigen Abstand zu Gefahrenstellen und ggf. zu Details der Automatisierungsabläufe berücksichtigt. Im einfachsten Fall kann die Gefährdung binär mit einer Annäherungsschwelle an eine Gefahrenstelle ermittelt werden. Die Risikokennzahl gibt also an, wie groß die Gefährdung einer Person 9 durch eine Gefahrstelle zum Zeitpunkt t ist.

Diese zeitabhängigen Risikokennzahlen für jede Person 9 lassen sich in Form einer N x M Matrix zusammenfassen und daraus eine Norm/Metrik ableiten, die einen zeitabhängigen Gefährdungswert für das Gesamtsystem bzw. für das Sicherheitssystem 1 darstellt. Im einfachsten Fall kann das ein zeitabhängiges Maximum der Gefährdung sein oder auch eine Summe aller Matrixeinträge. Diese numerische Beschreibung des Gesamtsystems erlaubt nun die Verwendung bekannter Optimierungsalgorithmen.

Gemäß Figur 7 weist das Sicherheitssystem eine Karte oder ein Kartenmodel auf und eine Navigation der bewegbaren Maschine 14 erfolgt in der Karte oder dem Kartenmodel.

Dabei kann das Kartenmodel auch Informationen zu Störeinflüsse wie Sperrungen oder Stauinformationen aufweisen.

Dabei kann auch der Vergleich mit zugänglichen Wegen in einem Grundrissplan zur Überprüfung dienen. Im Rahmen der Konfiguration des Ortungssystems wird dazu der Bereich markiert, in dem sich überhaupt mobile Maschinen 14 und Personen 9 aufhalten können, insbesondere begehbare oder befahrbare Wege. Eine Ortung, die außerhalb dieser Bereiche liegt, wird damit einen systematischen Messfehler signalisieren. Das Plausibilitätsmaß ist durch die festgestellte Inkonsistenz reduziert.

Diese konfigurierten Bereiche können ebenfalls zur Verbesserung der Positionsgenauigkeit verwendet werden, indem die Positionsinformation so korrigiert wird, dass sie in einem zugänglichen Bereich liegt. Diese Korrektur kann optional unter Zuhilfenahme von vergangenen Ortungen und Trajektorienschätzungen z.B. mit Hilfe eines Kalmanfilters erfolgen. Eine Korrektur wird das Plausibilitätsmaß einer Positionsinformation verringern, da die Korrektur einen zusätzlichen Unsicherheitsfaktor einbringt.

Auch hier kann durch Berücksichtigung vorangegangener Werte zusätzliche Information nutzbar gemacht werden. Die Korrektur inkonsistenter Positionswerte kann also in Richtung der letzten validen Messung oder gemäß einer Trajektorienschätzung erfolgen.

Weiter ist ein Vergleich von Funkortungen, die mit Hilfe unabhängiger oder unterschiedlicher Teilmengen der verfügbaren Funkstationen bzw. Ankerpunkte ermittelt wurden, möglich.

Das Verfahren macht sich zu Nutze, dass für die Bestimmung der Position in der Regel nicht alle Funkstationen 5 bzw. Ankerpunkte benötigt werden und damit eine Plausibilisierung aus den Messdaten selbst möglich ist, indem dieselbe Ortungsaufgabe von zwei unterschiedlichen Untergruppen der stationären Funkstationen durchgeführt wird. Hier wird wie beim Vergleich unabhängiger Messungen verschiedener Funktransponder ein Quervergleich mit der Erwartungshaltung der Übereinstimmung geprüft.

Gemäß Figur 2 sind an den Objekten 2 jeweils mindestens zwei Funktransponder 6 angeordnet, wobei die zwei Funktransponder 6 beabstandet zueinander angeordnet sind und die Steuer- und Auswerteeinheit 3 ausgebildet ist, die Positionsdaten der Funktransponder 6 zyklisch zu vergleichen und zyklisch geprüfte Positionsdaten der Objekte 2 zu bilden.

Gemäß Figur 2 stellt das Sicherheitssystem 1 somit sicherheitstechnisch verwendbare Positionsdaten zur Verfügung. Das bedeutet, dass die so gewonnenen Positionsdaten aller Personen 9 und Gefahrenstellen als Grundlage für ein umfassendes, vorausschauendes und produktivitätsoptimierendes Absicherungskonzept verwendet werden können.

Die Positionsverfolgung erfolgt mittels Funkortung. Die Objekte 2 erhalten Funktransponder 6, über die regelmäßig ein Ortungssignal an die ortsfesten Funkstationen 5 gesendet wird und in der Steuer- und Auswerteeinheit 3 bzw. in einer zentralen Steuerung eine Position bzw. Echtzeitposition des jeweiligen Objekts 2 erzeugt bzw. gebildet wird.

Gemäß Figur 2 sind somit die Positionsinformationen vieler oder aller mobilen Objekte oder mobilen Teilnehmer in einem industriellen Arbeitsumfeld in Echtzeit verfügbar.

Da jeweils mindestens zwei Funktransponder 6 an dem jeweiligen Objekt angeordnet sind können Fehler in der Ortungsinformation vermieden werden, da nämlich immer die Ortungsinformation von mindestens zwei unabhängigen Funktranspondern 6 zur Verfügung steht. Damit ist die Ortung und das gebildete Positionssignal im Sinne einer funktionalen Sicherheit verwendbar. Damit ist es möglich, fehlerhafte Ortungen aufzudecken und zu vermeiden und die Qualität der Ortsinformation zu verbessern.

Das Sicherheitssystem 1 gemäß Figur 2 ermöglicht es somit auch bei fehleranfälligen Funkortungsinformationen im Betriebsumfeld zu überprüfen, dass diese sicherheitstechnisch im Sinne von Maschinensicherheit verwendbar sind. Dabei wird aufgedeckt, wenn es zu Ortungsfehlern außerhalb eines vorgegebenen Toleranzbereiches kommt, beispielsweise aufgrund von zu schwachen Funksignalen. Eine fehlerhafte Ortungsinformation wird dabei möglichst korrigiert und für die weitere Verwendung nutzbar gemacht. Falls das nicht möglich ist, wird eine Fehlerbeherrschungsmaßnahme eingeleitet, beispielsweise wird der Positionswert als fehlerhaft gekennzeichnet.

Damit werden die vorliegenden Ortungsinformationen, Positionsinformationen bzw. Positionsdaten auf ihre Zuverlässigkeit hin überprüft. Weiter kann den Positionsdaten ein für die Weiterverwendung erforderliches Zuverlässigkeitsmaß zugeordnet werden.

Die Ortung der Funktransponder 6 erfolgt durch Laufzeitmessungen von Funksignalen, die zyklisch zwischen den Funktranspondern 6 und mehreren festen Funkstationen 5 ausgetauscht werden. Diese Triangulation funktioniert sehr gut, wenn die Signale mit ausreichender Signalstärke und auf geradem bzw. direktem Ausbreitungswege übermittelt werden. Da das nicht immer gegeben sein muss, wird nun ein Quervergleich zwischen den so ermittelten Positionsinformationen der Funktransponder 6 durchgeführt.

Aus sicherheitstechnischen Gründen ist optional eine redundante Positionsbestimmung mit mindestens zwei Funktranspondern 6 vorgesehen. Da die Funktransponder 6 klein und relativ günstig sind, ist diese Fehlerbeherrschungsmaßnahme leicht umzusetzen und im Hinblick auf die Fehlerbeherrschung sehr wirksam.

Grundsätzlich wird fortlaufend die Position beider Funktransponder 6 eines Objekts 2 ermittelt und miteinander verglichen. Durch den Vergleich der Positionen der Funktransponder 6 und insbesondere den Vergleich mit einer bekannten Erwartungshaltung, nämlich dem Abstand der Funktransponder 6 in einem Erwartungsbereich, lassen sich eine Reihe von kritischen Fehlerfällen beherrschen.

Gemäß Figur 2 wird also für mindestens zwei Funktransponder 6 in einer beabstandeten Anordnung die Positionen mittels Funkortung ermittelt und diese mit der Erwartungshaltung einer bekannten beabstandeten Anordnung verglichen.

Gemäß Figur 2 werden Abfolgeschritte und/oder Prozessschritte der Maschine 14 oder Anlage von der Steuer- und Auswerteeinheit 3 eingelesen.

Dadurch sind der Steuer- und Auswerteeinheit 3 zukünftig geplante Abfolgeschritte und/oder Prozessschritte bekannt und können für eine vorausschauende Reaktion und damit für eine vorausschauende Beeinflussung der Maschine 14 und/oder der mobilen Objekte 7 herangezogen werden.

Die Abfolgeschritte und/oder Prozessschritte liegen dabei beispielsweise in Form von Programmen oder Skripten vor, die von der Steuer- und Auswerteeinheit 3 eingelesen werden können. Beispielsweise handelt es sich bei den Programmen um Programme einer speicherprogrammierbaren Steuerung.

Gemäß Figur 2 wird optional mindestens eine Auftragsplanung für die Anlage und Zielkoordinaten der mobilen Objekte 7 bzw. Fahrzeuge von der Steuer- und Auswerteeinheit 3 eingelesen werden.

Dadurch sind der Steuer- und Auswerteeinheit 3 zukünftig geplante Abfolgeschritte und/oder Prozessschritte aufgrund der Auftragsplanung und der Zielkoordinaten der mobilen Objekte 7 bzw. mobilen Fahrzeuge bekannt und können für eine vorausschauende Reaktion und damit für eine vorausschauende Beeinflussung der Maschine 14 und/oder der mobilen Objekte 7 herangezogen werden.

Gemäß Figur 2 weist das Sicherheitssystem 1 optional eine Datenbank auf, wobei die Datenbank Daten zur Aufenthaltswahrscheinlichkeit der Objekte 2 und zeitlicher und/oder räumlicher Häufigkeitsverteilung der Objekte 2 aufweist.

Dadurch können statistische Informationen, die aus der Beobachtung vergangener Abläufe abgeleitet wurden, erzeugt und ausgewertet werden.

Beispielsweise sind der Steuer- und Auswerteeinheit 3 häufig gefahrene Routen und weniger häufige gefahrene Routen der mobilen Objekte 7 bekannt, wodurch eine mögliche Gefährdung für Personen 9 besser und mit einer höheren Wahrscheinlichkeit abgeschätzt werden kann. Durch die bekannten Aufenthaltswahrscheinlichkeiten kann eine mögliche Gefährdung für Personen 9 besser und mit einer höheren Wahrscheinlichkeit abgeschätzt werden, da beispielsweise an Punkten mit einer geringen Aufenthaltswahrscheinlichkeit von Personen 9 mobile Objekte 7 bzw. mobile Fahrzeuge mit höheren Geschwindigkeiten fahren können als in Bereichen A, B, in denen sich Personen 9 mit hoher Wahrscheinlichkeit aufhalten werden.

Gemäß Figur 2 wird mittels der Steuer- und Auswerteeinheit 3 optional ein Produktivitätsmaß der Anlage, der Maschine 14 und/oder der Objekte 2 erfasst.

Zusätzlich zu den bereits genannten Risikokennzahlen wird ein Produktivitätsmaß als Optimierungsparameter definiert. Im einfachsten Fall wird dabei eine akkumulierte Abschaltzeit der produktiven Abläufe oder eine Prozessdurchlaufzeit verwendet. Möglich ist jedoch auch die Verwendung von Durchsatzraten von Fahrstrecken, Energie und/oder Ressourcenverbrauch.

Unter Berücksichtigung einer Randbedingung, dass eine Norm der Risikokennzahl für jede Person 9 immer unter einem Grenzwert liegen muss, welches ein tolerierbares Risiko darstellt, wird das Produktivitätsmaß mit Hilfe der Variation der Trajektorien bzw. Bahnen oder anderer Prozessparameter optimiert. Das kann zum Beispiel mit Variationsansätzen durchgeführt werden oder mit einfachem Testen der verfügbaren Trajektorien und Prozessparameter. Primäre Optimierungsgröße ist die Produktivität.

Zusätzlich kann auch die Risikokennzahl selbst in eine Optimierung mit einfließen, um das Gesamtrisiko zu mindern. Interessant ist dies zum Beispiel, wenn es mehrere alternative Trajektorien gibt, die in einer vergleichbaren Produktivität resultieren, etwa wenn ein mobiles Objekt 7 zwei Möglichkeiten hat einen Zielpunkt zu erreichen, wobei beispielsweise bei einer ersten Route das mobile Objekt 7 in die Nähe einer einzigen Person 9 kommt und bei der zweiten alternativen Route das mobile Objekt 7 in die Nähe mehrerer Personen 9 kommt. Hier ist auf der ersten Route das Gesamtrisiko niedriger als auf der zweiten Route mit mehr Personen 9, die gefährdet werden können.

Entscheidend ist dabei, dass die Trajektorien der einzelnen Teilnehmer nicht rückwirkungsfrei sind, d. h. Einfluss auf die Risikokennzahl anderer Personen 9 haben können. Die Optimierung erfolgt daher sinnvoll im Gesamtsystem.

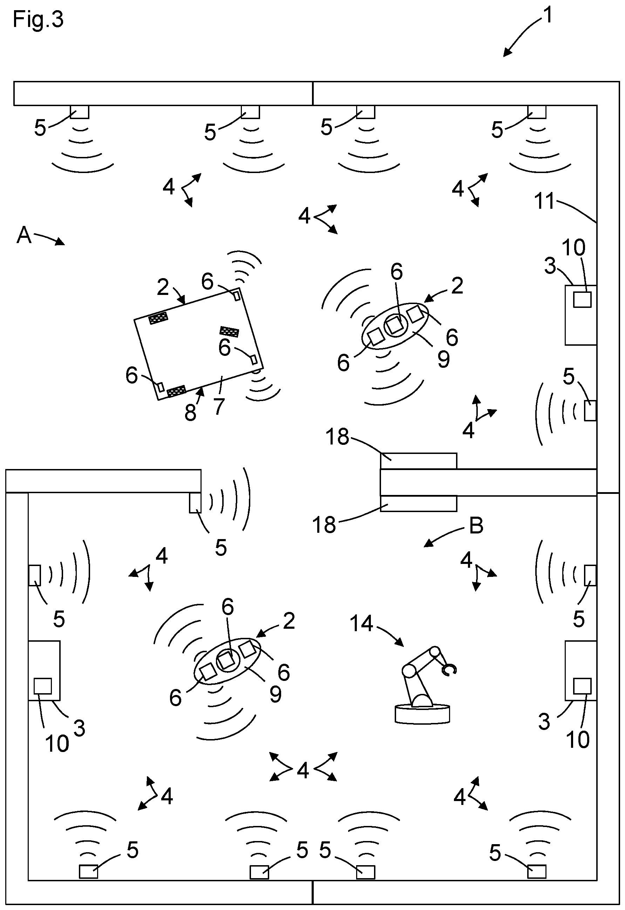

Gemäß Figur 3 werden mittels mindestens einer Anzeigeeinheit 18 Warnhinweise an die Personen 9 ausgegeben.

Ein verbesserter Systemzustand wird durch Hinweise bzw. Weisungen mittels der Anzeigeeinheit 18 erreicht.

So kann mittels einer Anzeigeeinheit 18 für einen Bereich A, B beispielsweise dynamisch angezeigt werden, ob in diesem Bereich A, B ein Aufenthalt von Personen 9 erlaubt ist oder nicht. Weiter kann mittels der Anzeigeeinheit 18 beispielsweise für Personen 9 empfohlene Routen angezeigt werden, bzw. vor nicht empfohlenen Routen gewarnt werden.

Gemäß den Figuren ist die Steuer- und Auswerteinheit 3 ausgebildet, die Maschine 14 und/oder das mobiles Objekt 7 bzw. Fahrzeug zu steuern und damit zu beeinflussen.

Der optimale Systemzustand wird beispielsweise durch eine Steuerung von Maschinen 14 und Prozessabläufen erreicht.

Die Wirksamkeit der verschiedenen Einwirkungen und ihr Einfluss auf die Produktivität sind dabei unterschiedlich und werden für eine Priorisierung der Maßnahmen verwendet. Zum Beispiel muss damit gerechnet werden, dass eine Warnung an eine Person 9 oder die Anweisung einen alternativen Weg einzuschlagen, von Personen 9 ignoriert wird. Bei unmittelbar drohender Gefährdung wird daher auf die sehr viel zuverlässigeren Steuerungen der Maschinen 14 zurückgegriffen, z. B. ein Verlangsamen der Maschine 14 oder ein Notstopp der Maschine 14.

Zu jedem Zeitpunkt wird dabei aus der Beobachtung der zeitlichen Entwicklung des Sicherheitssystems 1 bewertet, ob das Sicherheitssystem 1 optimiert wird und ob die Zwangsbedingungen, wonach ein Risiko tolerierbar ist, eingehalten werden. Diese Bewertung fließt als Feedback in die Auswahl der Steuerungsmaßnahmen ein.

Gemäß Figur 2 werden aufgrund der detektierten Signalstärken der Funksignale der Funktransponder 6 und aus dem Vergleich der Positionsdaten der Funktransponder 6 Plausibilitätswerte gebildet.

Als Ergebnis der Konsistenzüberprüfung wird ein Plausibilitätsmaß abgeleitet, das in die weitere Verwendung der Positionsdaten bzw. der Positionsinformationen einfließt. Ein Positionswert, der durch verschiedene unabhängige Quellen mit einem geringen Relativitätsfehler bestätigt wird, erhält dabei einen sehr hohen Plausibilitätswert. Wenn es hingegen zu großen Abweichungen der unabhängigen Messungen voneinander kommt oder Messwerte fehlen oder unplausibel sind, dann wird diesen Messungen ein niedriger Plausibilitätswert zugeordnet.

Dabei wird geprüft, ob die gemessenen Positionen im Rahmen einer vorgegebenen Toleranz mit einer bekannten Konfiguration übereinstimmen, oder ob es signifikante Abweichungen gibt. Je nach Grad der Übereinstimmung wird eine Plausibilitätskennzahl der Funkortung für diesen Messzyklus gesetzt. Ein hoher Plausibilitätswert bedeutet daher gute Übereinstimmung zwischen Erwartung und Messung, während ein kleiner Plausibilitätswert eine fehlerhafte Messung signalisiert. Diese Plausibilitätszahl kann als "safety-related confidence information" gemäß IEC62998-1 für die Weiterverarbeitung in einer sicherheits-relevanten Funktion zum Einsatz kommen.

Gemäß Figur 2 sind beispielsweise die Abstände zwischen den Funktranspondern 6 der Steuer- und Auswerteeinheit 3 bekannt und sind in einem Speicher 10 der Steuer und Auswerteeinheit 3 abgespeichert.

Dadurch ist es möglich, verschiedene Objekte 2 mit individuellen Abständen der Funktransponder 6 einzulernen und diese abzuspeichern, so dass das Sicherheitssystem 1 abgespeicherte Objekte 2 identifizieren kann und von nicht abgespeicherten Objekten 2 unterscheiden kann.

Gemäß Figur 2 variieren die Abstände zwischen den Funktranspondern 6 bei einer Person 9 aufgrund der Bewegung der Person 9 oder sind veränderlich.

Dadurch ändert sich der Abstand von mindestens zwei Funktranspondern 6, sobald sich die Person 9 bewegt, wodurch die Positionserfassung der Funktransponder 6 dynamisiert wird und dadurch testbar wird, wodurch Fehler in der Positionserfassung und in der Erfassung der Orientierung vermieden werden. Beispielsweise ändert sich der Abstand von zwei Funktranspondern 6, die jeweils an den Schultern einer Person 9 angeordnet sind geringfügig beim Gehen der Person 9, da sich die Position der Schulterblätter leicht verändert.

Die Abstände der Funktransponder 6 sind damit veränderlich, wobei auch hier der veränderliche Abstand bekannt ist. Dabei kann der Abstand beispielsweise gemessen, insbesondere zyklisch gemessen werden.

Gemäß Figur 3 sind mindestens drei Funktransponder 6 angeordnet, wobei die Steuer-und Auswerteeinheit 3 ausgebildet ist, aus den Positionsdaten der Funktransponder 6 Orientierungsdaten des Objektes 2 zu bilden.

Beispielsweise sind zwei Funktransponder 6 an den Schultern einer Weste einer Person 9 angeordnet. Beispielsweise ist ein weiterer Funktransponder 6 an einem Helm der Person 9 angeordnet.

Dadurch liegt sicherheitstechnisch vorteilhaft ein überbestimmtes System vor. Selbst wenn ein Funktransponder 6 ausfallen sollte bzw. dessen Funksignale nicht erfassbar wären, verbleiben immer noch zwei Funktransponder 6, die redundant ausgewertet werden können. Dadurch liegt ein hoch verfügbares Sicherheitssystem 1 vor.

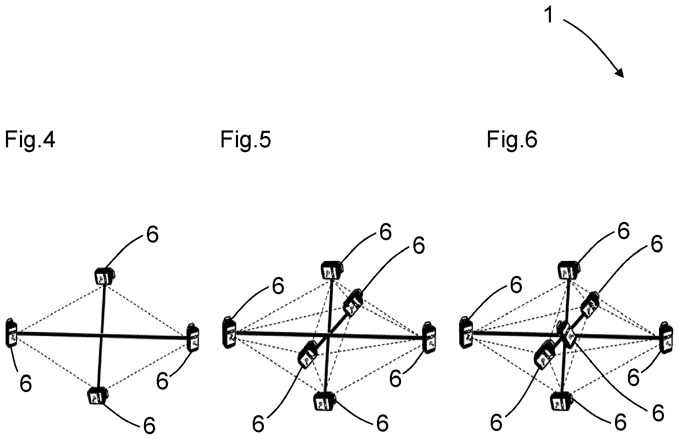

Gemäß Figur 4 sind mindestens vier, gemäß Figur 5 mindestens sechs oder gemäß Figur 6 mindestens acht Funktransponder 6 an dem Objekt angeordnet, wobei jeweils zwei Funktransponder 6 auf jeweils einer Geraden liegen, wobei die Geraden jeweils insbesondere senkrecht zueinander sind.

Dadurch sind Funktransponder 6 jeweils paarweise angeordnet, wobei die jeweiligen Paare jeweils eine unterschiedliche Orientierung aufweisen. Dadurch ist eine Orientierungsbestimmung aus jeder Richtung eindeutig. Weiter kann auch im Kreuzungspunkt der Geraden ein Funktransponder 6 angeordnet sein, so dass ein einzelner Funktransponder 6 einen Mittelpunkt bzw. einen zentralen Positionspunkt bildet, welcher als Referenzposition herangezogen werden kann.

Gemäß Figur 7 weisen die Funktransponder 6 jeweils mindestens eine Zeitmesseinheit auf, wobei die Funkstationen 5 ebenfalls jeweils mindestens eine Zeitmesseinheit aufweisen, wobei die Funkstationen 5 ausgebildet sind, die Zeiten der Zeitmesseinheiten der Funktransponder 6 auszulesen und zu beschreiben und die Funkstationen 5 ausgebildet sind, die Zeiten der Zeitmesseinheiten der Funktransponder 6 zu synchronisieren und die Funkstationen 5 ausgebildet sind, die Zeiten der Zeitmesseinheiten der Funktransponder 6 mit den Zeiten der Zeitmesseinheiten der Funkstationen 5 zu vergleichen.

Dadurch ist eine präzisiere Positionsbestimmung möglich, welche durch die Synchronisation auch dauerhaft präzise durchgeführt werden kann, insbesondere bei sich bewegenden Objekten.

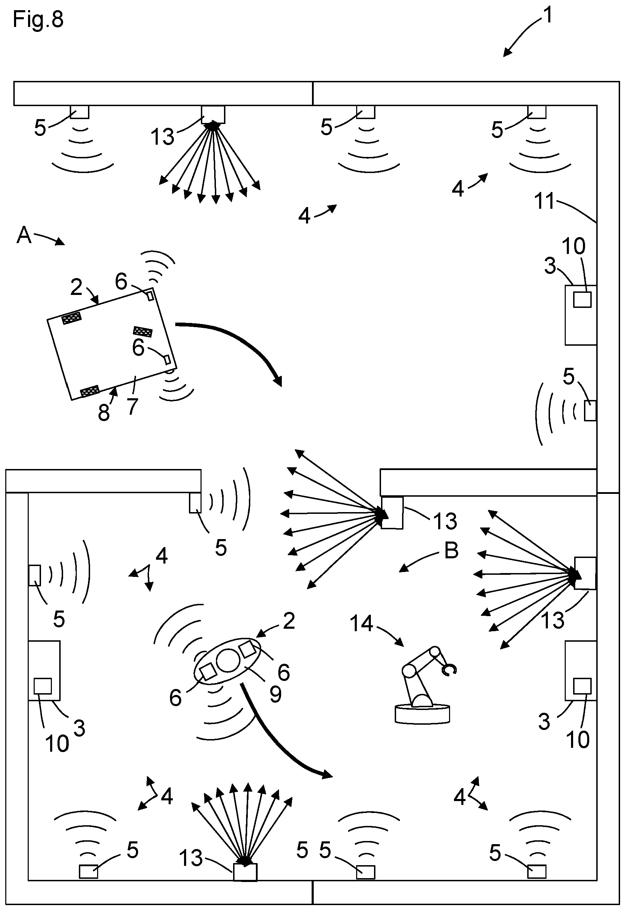

Gemäß Figur 8 weist das Sicherheitssystem 1 optische Sensoren 13 auf zur Ortung und Detektion der Objekte 2.

Die Positionsdaten bzw. Positionsinformationen können mit sicheren oder nicht-sicheren Positionsdaten bzw. Positionsinformationen, die punktuell an bestimmten Orten im Betriebsumfeld mit Hilfe optischer Sensoren 13 erfasst wurden, verglichen werden.

Ein Beispiel ist der Abgleich mit den Positionsdaten, die im Sichtbereich eines optischen Sensors 13, beispielsweise einer 3D-Kamera ermittelt wurden. Das kann zum Beispiel in einem Kreuzungsbereich sein. Hierbei wird bei Erfassung eines Objekts 2 im Sichtbereich die Position relativ zur 3D-Kamera ermittelt und mit der bekannten Position der 3D-Kamera die globale Position des Objekts 2 abgeleitet. Dabei sind sowohl statisch angebrachte optische Sensoren 13 als auch mobile optische Sensoren 13, deren Position und Orientierung durch andere Quellen bekannt ist, vorgesehen. Anschließend wird geprüft, ob sich in einer Liste der mittels Funkortung verfolgten Objekte 2 ein Objekt 2 befindet, das zu diesem Positionswert passt. Bei hinreichender Übereinstimmung gilt der Positionswert der Funkortung als geprüft. In diesem Fall hat ein diversitär redundanter Ansatz die Messung bestätigt.

Die optischen Positionsdaten haben üblicherweise eine bessere Genauigkeit und können zusätzlich dazu benutzt werden, die Positionsgenauigkeit der Person 9 oder der mobilen Objekte 7 zu verbessern.

Die Plausibilität eines Positionswertes ist also umso größer, je besser die Übereinstimmung zwischen optischer Positionsbestimmung und Funkortung ist und je eindeutiger auch die Zuordnung zwischen optischer Positionsbestimmung und Funkortung möglich ist. Im oben dargestellten Fall kann die zusätzliche Schwierigkeit beispielsweise darin bestehen, dass nicht sicher festgestellt werden kann, ob eine erste Funkortung nicht möglicherweise auch zur einer zweiten optischen Ortung gehört und umgekehrt. Solche Mehrdeutigkeiten werden in der Plausibilität berücksichtigt. Diese Berücksichtigung kann dadurch erfolgen, dass die Zuordnung sicherheitsgerichtet so vorgenommen wird, dass eine minimale Abweichung zwischen Funkortung und optischer Position resultiert. Sie kann alternativ auch dadurch erfolgen, dass vorangegangene Positionswerte verfolgt werden und die Zuordnung so gemacht wird, dass der Abstand zur vorangegangenen Messung minimiert wird.

Gemäß einem nicht dargestellten Ausführungsbeispiel weist das Sicherheitssystem 1 Radarsensoren, RFID-Sensoren und/oder Ultraschallsensoren auf zur Ortung und Detektion der Objekte.

Gemäß Figur 2 ist das Funkortungssystem 4 optional ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20% der zentralen Frequenz.

Die Reichweite eines derartigen Funkortungssystems 4 beträgt beispielsweise 0 bis 50 m. Dabei wird die kurze zeitliche Dauer der Funkpulse für die Ortung benutzt.

Das Funkortungssystem 4 sendet damit nur Funkwellen mit einer niedrigen Energie aus. Das System ist sehr flexibel einsetzbar und weist keine Interferenzen auf.

Vorzugsweise sind gemäß Figur 2 eine Vielzahl, beispielsweise mehr als drei Funkstationen 5 angeordnet, welche mindestens einen Teil des Bewegungsbereichs der Person 9 oder des Objektes 2 überwachen.

Gemäß Figur2 erfolgt optional aufgrund der geprüften Positionsdaten mittels der Steuer-und Auswerteeinheit 3 eine Veränderung der Sicherheitsfunktion des Sicherheitssystems 1.

Wenn beispielsweise eine vorbestimmte Position erkannt ist, welche beispielsweise abgespeichert ist, kann die Steuer- und Auswerteeinheit 3 auf eine andere Schutzmaßnahme bzw. Sicherheitsfunktion umschalten. Das Umschalten der Schutzmaßnahme kann beispielsweise ein Umschalten von Messdatenkonturen, ein Umschalten von Schutzfeldern, eine Größen- oder Formanpassung von Messdatenkonturen oder Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

Gemäß Figur 2 werden beispielsweise mittels der Steuer- und Auswerteeinheit 3 geprüften Positionsdaten mit gespeicherten Positionsdaten eines Sicherheitspunktes auf Übereinstimmung geprüft.

An bestimmten Überwachungsstellen, die sowohl beispielsweise optisch ermittelte Positionsinformationen als auch durch Funkortung ermittelte Positionsinformationen liefern, kann zudem optional eine Überprüfung der Funkortung in dem Sinne durchgeführt werden, dass geprüft wird, ob für ein detektiertes Objekt 2 überhaupt eine Funkortung erfolgt ist. So eine Bestätigung kann die sicherheitskritischen Fehlerfälle eines fehlenden oder nicht funktionierenden Tags aufdecken und die Anforderungen an eine zyklische Prüfung im Sinne der Norm ISO 13849-1 erfüllen.

Der Vergleich mit unabhängigen Positionsdaten kann auch an bekannten Interaktionspunkten erfolgen. Zum Beispiel bei Betätigung eines Schalters oder beim überwachten Durchtritt durch eine Tür oder einen Durchgang gemäß Figur 2. In diesem Moment ist die Position des Bedieners sehr genau bekannt und kann für eine Validierung der Positionsdaten bzw. der Positionsinformation genutzt werden. Entsprechendes ist auch bei autonomen Fahrzeugen möglich. Beim Andocken in einer Ladestation oder bei der Ankunft an Übergabestationen ist die Position sehr genau bekannt und kann zur Überprüfung der Funkortung und sicherheitstechnischen Fehlerbeherrschung verwendet werden.

Weiter ist ein Vergleich von Funkortungen, die mit Hilfe unabhängiger oder unterschiedlicher Teilmengen der verfügbaren Funkstationen 5 bzw. Ankerpunkte ermittelt wurden, möglich.

Das Verfahren macht sich zu Nutze, dass für die Bestimmung der Position in der Regel nicht alle Funkstationen 5 bzw. Ankerpunkte benötigt werden und damit eine Plausibilisierung aus den Messdaten selbst möglich ist, indem dieselbe Ortungsaufgabe von zwei unterschiedlichen Untergruppen der stationären Funkstationen durchgeführt wird. Hier wird wie beim Vergleich unabhängiger Messungen verschiedener Funktransponder ein Quervergleich mit der Erwartungshaltung der Übereinstimmung geprüft.

### Bezugszeichen:

- 1: Sicherheitssystem
- 2: Objekt
- 3: Steuer- und Auswerteeinheit
- 4: Funkortungssystem
- 5: Funkstationen
- 6: Funktransponder
- 7: mobile Objekte
- 8: mobile Fahrzeuge
- 9: Person
- 10: Speicher
- 11: Wand/Begrenzung
- 12: Bahn/Trajektorie
- 13: optische Sensoren
- 14: Maschine
- 18: Anzeigeeinheit

- A: Bereich
- B: Bereich

## Patentansprüche

1. Sicherheitssystem (1) zur Lokalisierung von mindestens zwei ortsveränderlichen Objekten (2), mit mindestens einer Steuer- und Auswerteeinheit (3), mit mindestens einem Funkortungssystem (4),
wobei das Funkortungssystem (4) mindestens drei angeordnete Funkstationen (5) aufweist,
wobei an den Objekten (2) jeweils mindestens ein Funktransponder (6) angeordnet ist,
wobei mittels dem Funkortungssystem (4) Positionsdaten des Funktransponders und damit Positionsdaten der Objekte (2) ermittelbar sind,
wobei die Positionsdaten von der Funkstation (5) des Funkortungssystems (4) an die Steuer- und Auswerteeinheit (3) übermittelbar sind,
und/oder die Positionsdaten von dem Funktransponder (6) an die Steuer- und Auswerteeinheit (3) übermittelbar sind,
wobei
die Steuer- und Auswerteeinheit (3) ausgebildet ist, die Positionsdaten der Funktransponder zyklisch zu erfassen, wobei die Funktransponder (6) eine Identifikation aufweisen, wobei jeweils ein Funktransponder (6) jeweils einem Objekt (2) zugeordnet ist, wodurch die Steuer- und Auswerteeinheit (3) ausgebildet ist, die Objekte (2) zu unterscheiden,
wobei die Steuer- und Auswerteeinheit (3) ausgebildet ist, jedem Objekt (2) eine Risikokennzahl zuzuordnen mindestens abhängig von der Position des Objekts (2) zu einem anderen Objekt (2), wobei die Risikokennzahl angibt, wie groß die Gefährdung eines Objekts ist, wobei erste Objekte (2) Personen (9) sind und zweite Objekte (2) mobile Fahrzeuge (8) sind, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt und mindestens eine Auftragsplanung für eine Anlage und Zielkoordinaten der mobilen Fahrzeuge (8) von der Steuer- und Auswerteeinheit (3) eingelesen werden, wobei Prozessschritte der Maschine oder Anlage von der Steuer- und Auswerteeinheit eingelesen werden, wobei mittels der Steuer- und Auswerteeinheit (3) ein Produktivitätsmaß der Anlage, der Maschine (14) und/oder der Objekte (2) erfasst wird, wobei die Steuer-und Auswerteeinheit (3) ausgebildet ist, die Maschine (14) und/oder das mobile Fahrzeug (8) zu steuern und damit zu beeinflussen, wobei bei unmittelbar drohender Gefährdung eine Änderung einer Reihenfolge einzelner Prozessschritte eines Automatisierungsablaufs vorgesehen ist.

2. Sicherheitssystem (1) nach Anspruch 1, **dadurch gekennzeichnet, dass** erste Objekte (2) mobile Objekte (7) sind und zweite Objekte (2) mobile Objekte (7) sind,
wobei die Funktransponder (6) eine Identifikation aufweisen, wobei jeweils ein Funktransponder (6) einem mobilen Objekt (7) zugeordnet ist, wodurch die Steuer- und Auswerteeinheit (3) ausgebildet ist, die mobilen Objekte (7) zu unterscheiden,
wobei die Steuer- und Auswerteeinheit (3) ausgebildet ist, jedem mobilen Objekt (7) eine Risikokennzahl zuzuordnen mindestens abhängig von der Position von einem mobilen Objekt (7) zu mindestens einem anderen mobilen Objekt (7).

3. Sicherheitssystem (1) nach Anspruch 1, **dadurch gekennzeichnet, dass** erste Objekte (2) Personen (9) sind und zweite Objekte (2) mobile Objekte (7) sind,
wobei die Funktransponder (6) eine Identifikation aufweisen, wobei jeweils ein Funktransponder (6) mindestens einer Person (9) und jeweils ein Funktransponder mindestens einem mobilen Objekt (7) zugeordnet ist, wodurch die Steuer- und Auswerteeinheit (3) ausgebildet ist, die Personen (9) und mobilen Objekte (7) zu unterscheiden,
wobei die Steuer- und Auswerteeinheit (3) ausgebildet ist, jeder Person (9) eine Risikokennzahl zuzuordnen mindestens abhängig von der Position der Person (9) zu mindestens einem mobilen Objekt (7).

4. Sicherheitssystem (1) nach mindestens einem der vorhergehenden Ansprüche, **dadurch gekennzeichnet, dass** mindestens eine ortsfest angeordnete Maschine einer Anlage mit einer Gefahrenstelle der Maschine vorhanden ist, wobei die Position der ortsfest angeordneten Gefahrenstelle der Steuer- und Auswerteeinheit bekannt ist.

5. Sicherheitssystem (1) nach mindestens einem der vorhergehenden Ansprüche, **dadurch gekennzeichnet, dass** die Steuer- und Auswerteeinheit (3) ausgebildet ist, jeweils eine Position der Funktransponder (6) zu unterschiedlichen Zeitpunkten zu ermitteln und daraus eine Geschwindigkeit, eine Beschleunigung, eine Bewegungsrichtung und/oder mindestens eine Bahn (12) oder eine Trajektorie der Funktransponder (6) zu bestimmen.

6. Sicherheitssystem (1) nach mindestens einem der vorhergehenden Ansprüche, **dadurch gekennzeichnet, dass** das Sicherheitssystem (1) eine Karte oder ein Kartenmodel aufweist und eine Navigation der bewegbaren Maschine in der Karte oder dem Kartenmodel erfolgt.

7. Sicherheitssystem nach mindestens einem der vorhergehenden Ansprüche, **dadurch gekennzeichnet, dass** an den Objekten (2) jeweils mindestens zwei Funktransponder (6) angeordnet sind, wobei die zwei Funktransponder (6) beabstandet zueinander angeordnet sind und die Steuer- und Auswerteeinheit (3) ausgebildet ist, die Positionsdaten der Funktransponder (6) zyklisch zu vergleichen und zyklisch geprüfte Positionsdaten der Objekte (2) zu bilden.

8. Sicherheitssystem (1) nach mindestens einem der vorhergehenden Ansprüche, **dadurch gekennzeichnet, dass** das Sicherheitssystem eine Datenbank aufweist, wobei die Datenbank Daten zur Aufenthaltswahrscheinlichkeit der Objekte und zeitlicher und/oder räumlicher Häufigkeitsverteilung der Objekte aufweist.

9. Sicherheitssystem (1) nach mindestens einem der vorhergehenden Ansprüche, **dadurch gekennzeichnet, dass** mittels mindestens einer Anzeigeeinheit Warnhinweise an die Personen ausgegeben werden.

10. Sicherheitssystem (1) nach mindestens einem der vorhergehenden Ansprüche, **dadurch gekennzeichnet, dass** aufgrund der detektierten Signalstärken der Funksignale der Funktransponder und aus dem Vergleich der Positionsdaten der Funktransponder Plausibilitätswerte gebildet werden.

11. Sicherheitssystem (1) nach mindestens einem der vorhergehenden Ansprüche, **dadurch gekennzeichnet, dass** die Abstände zwischen den Funktranspondern (6) der Steuer- und Auswerteeinheit (3) bekannt sind und in einem Speicher der Steuer und Auswerteeinheit abgespeichert sind.

12. Sicherheitssystem (1) nach mindestens einem der vorhergehenden Ansprüche, **dadurch gekennzeichnet, dass** die Abstände zwischen den Funktranspondern (6) bei einer Person aufgrund der Bewegung der Person variieren oder veränderlich sind.

13. Sicherheitssystem (1) nach mindestens einem der vorhergehenden Ansprüche, **dadurch gekennzeichnet, dass** mindestens drei Funktransponder angeordnet sind, wobei die Steuer- und Auswerteeinheit (3) ausgebildet ist, aus den Positionsdaten der Funktransponder (6) Orientierungsdaten des Objektes (2) zu bilden.

14. Sicherheitssystem (1) nach mindestens einem der vorhergehenden Ansprüche, **dadurch gekennzeichnet, dass** mindestens vier, mindestens sechs oder mindestens acht Funktransponder (6) an dem Objekt (2) angeordnet sind, wobei jeweils zwei Funktransponder (6) auf jeweils einer Geraden liegen, wobei die Geraden jeweils in einem Winkel von 90° +/- 15° zueinander sind.

15. Sicherheitssystem (1) nach mindestens einem der vorhergehenden Ansprüche, **dadurch gekennzeichnet, dass** die Funktransponder (6) jeweils mindestens eine Zeitmesseinheit aufweisen, wobei die Funkstationen (5) ebenfalls jeweils mindestens eine Zeitmesseinheit aufweisen, wobei die Funkstationen (5) ausgebildet sind, die Zeiten der Zeitmesseinheiten der Funktransponder (6) auszulesen und/oder zu beschreiben und die Funkstationen (5) ausgebildet sind die Zeiten der Zeitmesseinheiten der Funktransponder (6) zu synchronisieren und/oder die Funkstationen (5) ausgebildet sind, die Zeiten der Zeitmesseinheiten der Funktransponder (6) mit den Zeiten der Zeitmesseinheiten der Funkstationen (5) zu vergleichen.

16. Sicherheitssystem (1) nach mindestens einem der vorhergehenden Ansprüche, **dadurch gekennzeichnet, dass** das Sicherheitssystem optische Sensoren aufweist zur Ortung und Detektion der Objekte.

17. Sicherheitssystem nach mindestens einem der vorhergehenden Ansprüche, **dadurch gekennzeichnet, dass** das Sicherheitssystem Radarsensoren aufweist zur Ortung und Detektion der Objekte.

18. Sicherheitssystem nach mindestens einem der vorhergehenden Ansprüche, **dadurch gekennzeichnet, dass** das Sicherheitssystem RFID-Sensoren aufweist zur Ortung und Detektion der Objekte.

19. Sicherheitssystem nach mindestens einem der vorhergehenden Ansprüche, **dadurch gekennzeichnet, dass** das Sicherheitssystem Ultraschallsensoren aufweist zur Ortung und Detektion der Objekte.

20. Sicherheitssystem (1) nach mindestens einem der vorhergehenden Ansprüche, **dadurch gekennzeichnet, dass** aufgrund der geprüften Positionsdaten mittels der Steuer- und Auswerteeinheit (3) eine Veränderung der Sicherheitsfunktion des Sicherheitssystems (1) erfolgt.

21. Sicherheitssystem (1) nach mindestens einem der vorhergehenden Ansprüche, **dadurch gekennzeichnet, dass** aufgrund der geprüften Positionsdaten mittels der Steuer- und Auswerteeinheit (3) eine Änderung einer Reihenfolge von Prozessschritten eines Automatisierungsablaufs einer Anlage erfolgt.

22. Sicherheitssystem (1) nach mindestens einem der vorhergehenden Ansprüche, **dadurch gekennzeichnet, dass** mittels der Steuer- und Auswerteeinheit (3) geprüften Positionsdaten mit gespeicherten Positionsdaten eines Sicherheitspunktes auf Übereinstimmung geprüft werden.

23. Verfahren mit einem Sicherheitssystem zur Lokalisierung von mindestens zwei ortsveränderlichen Objekten (2), mit mindestens einer Steuer- und Auswerteeinheit (3),
wobei das Funkortungssystem (4) mindestens drei angeordnete Funkstationen (5) aufweist,
wobei an den Objekten (2) jeweils mindestens ein Funktransponder (6) angeordnet wird,
wobei mittels dem Funkortungssystem (4) Positionsdaten des Funktransponders und damit Positionsdaten der Objekte (2) ermittelt werden,
wobei die Positionsdaten von der Funkstation (5) des Funkortungssystems (4) an die Steuer- und Auswerteeinheit (3) übermittelt werden,
und/oder die Positionsdaten von dem Funktransponder (6) an die Steuer- und Auswerteeinheit übermittelt werden,
wobei
die Steuer- und Auswerteeinheit (3) ausgebildet ist, die Positionsdaten der Funktransponder zyklisch zu erfassen,
wobei die Funktransponder (6) eine Identifikation aufweisen, wobei jeweils ein Funktransponder (6) jeweils einem Objekt (2) zugeordnet wird, wodurch die Steuer- und Auswerteeinheit (3) ausgebildet ist, die Objekte (2) zu unterscheiden,
wobei die Steuer- und Auswerteeinheit (3) ausgebildet ist, jedem Objekt (2) eine Risikokennzahl zuzuordnen mindestens abhängig von der Position des Objekts (2) zu einem anderen Objekt (2), wobei die Risikokennzahl angibt, wie groß die Gefährdung eines Objekts ist wobei erste Objekte (2) Personen (9) sind und zweite Objekte (2) mobile Fahrzeuge (8) sind, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt und mindestens eine Auftragsplanung für eine Anlage und Zielkoordinaten der mobilen Fahrzeuge (8) von der Steuer- und Auswerteeinheit (3) eingelesen werden, wobei Prozessschritte der Maschine oder Anlage von der Steuer- und Auswerteeinheit eingelesen werden, wobei mittels der Steuer- und Auswerteeinheit (3) ein Produktivitätsmaß der Anlage, der Maschine (14) und/oder der Objekte (2) erfasst wird,
wobei die Steuer-und Auswerteeinheit (3) ausgebildet ist, die Maschine (14) und/oder das mobiles Fahrzeug (8) zu steuern und damit zu beeinflussen, wobei bei unmittelbar drohender Gefährdung eine Änderung einer Reihenfolge einzelner Prozessschritte eines Automatisierungsablaufs vorgesehen ist.

## Claims

1. A safety system (1) for localizing at least two objects (2) having variable locations, having at least one control and evaluation unit (3), having at least one radio location system (4),
wherein the radio location system (4) has at least three arranged radio stations (5);
wherein at least one radio transponder (6) is respectively arranged at the objects (2);
wherein position data of the radio transponder and thus position data of the objects (2) can be determined by means of the radio location system (4);
with the position data being able to be transmitted from the radio station (5) of the radio location system (4) to the control and evaluation unit (3); and/or with the position data being able to be transmitted from the radio transponder (6) to the control and evaluation unit (3),
wherein
the control and evaluation unit (3) is configured to cyclically detect the position data of the radio transponders, with the radio transponders (6) having identification, with a respective radio transponder (6) being associated with a respective object (2), whereby the control and evaluation unit (3) is configured to distinguish the objects (2); and wherein the control and evaluation unit (3) is configured to associate a risk index with every object (2) at least in dependence on the position of the object (2) with respect to another object (2), wherein the risk index indicates how great the danger of an object is, with first objects (2) being persons (9) and second objects (2) being mobile vehicles (8), **characterized in that**
the radio location system (4) is an ultrawide band radio location system, with the frequency used being in the range from 3.1 GHz to 10.6 GHz, with the transmission energy per radio station (5) amounting to a maximum of 0,5 mW and with at least one job planning for a plant and target coordinates of the mobile vehicles (8) being read by the control and evaluation unit (3), with process steps of the machine or plant being read by the control and evaluation unit, and with a degree of productivity of the plant, of the machine (14), and/or of the objects (2) being detected by means of the control and evaluation unit (3),
with the control and evaluation unit (3) being configured to control and thus to influence the machine (14) and/or the mobile vehicle (8), with a change of an order of individual process steps of an automation routine being provided on a directly impending danger.

2. A safety system (1) in accordance with claim 1, **characterized in that** first objects (2) are mobile objects (7) and second objects (2) are mobile objects (7),
with the radio transponders (6) having identification, and with a respective radio transponder (6) being associated with a mobile object (7), whereby the control and evaluation unit (3) is configured to distinguish the mobile objects (7); and
with the control and evaluation unit (3) being configured to associate a risk index with each mobile object (7) at least in dependence on the position of a mobile object (7) with respect to at least one other mobile object (7).

3. A safety system (1) in accordance with claim 1, **characterized in that** first objects (2) are persons (9) and second objects (2) are mobile objects (7), with the radio transponders (6) having identification, with a respective radio transponder (6) being associated with at least one person (9) and a respective radio transponder (6) being associated with at least one mobile object (7), whereby the control and evaluation unit (3) is configured to distinguish the persons (9) and mobile objects (7), with the control and evaluation unit (3) being configured to associate a risk index with each person (9) at least in dependence on the position of the person (9) with respect to at least one mobile object (7).

4. A safety system (1) in accordance with at least one of the preceding claims, **characterized in that** the at least one fixed position machine of a plant having a hazard site of the machine is present, with the position of the fixed position hazard site being known to the control and evaluation unit.

5. A safety system (1) in accordance with at least one of the preceding claims, **characterized in that** the control and evaluation unit (3) is configured to respectively determine a position of the radio transponders (6) at different points in time and to determine a speed, an acceleration, a direction of movement and/or a path (12) or a trajectory of the radio transponders (6) from it.

6. A safety system (1) in accordance with at least one of the preceding claims, **characterized in that** the safety system (1) has a map or a map model; and **in that** a navigation of the movable machine takes place in the map or in the map model.

7. A safety system in accordance with at least one of the preceding claims, **characterized in that** at least two respective radio transponders (6) are arranged at the objects (2), with the two radio transponders (6) being arranged spaced apart from one another and with the control and evaluation unit (3) being configured to cyclically compare the position data of the radio transponders (6) and to form cyclically checked position data of the objects (2).

8. A safety system (1) in accordance with at least one of the preceding claims, **characterized in that** the safety system has a database, with the database having data on the dwell probability of the objects and a time and/or space frequency distribution of the objects.

9. A safety system (1) in accordance with at least one of the preceding claims, **characterized in that** warnings are output to the persons by means of at least one display unit.

10. A safety system (1) in accordance with at least one of the preceding claims, **characterized in that** plausibility values are formed on the basis of the detected signal strengths of the radio signals of the radio transponders and from the comparison of the position data of the radio transponders.

11. A safety system (1) in accordance with at least one of the preceding claims, **characterized in that** the spacings between the radio transponders (6) are known to the control and evaluation unit (3) and are stored in a memory of the control and evaluation unit.

12. A safety system (1) in accordance with at least one of the preceding claims, **characterized in that** the spacings between the radio transponders (6) vary or are variable in a person due to the movement of the person.

13. A safety system (1) In accordance with at least one of the preceding claims, **characterized in that** at least three radio transponders are arranged, with the control and evaluation unit (3) being configured to form orientation data of the object (2) from the position data of the radio transponders (6).

14. A safety system (1) in accordance with at least one of the preceding claims, **characterized in that** at least four, at least six, or at least eight radio transponders (6) are arranged at the object (2), with two respective transponders (6) being disposed on a respective one straight line, with the straight lines each being at an angle of 90°+/- 15° to one another.

15. A safety system (1) in accordance with at least one of the preceding claims, **characterized in that** the radio transponders (6) each have at least one time measurement unit, with the radio stations (5) likewise respectively having at least one time measuring unit, with the radio stations (5) being configured to read and/or describe the times of the time measurement units of the radio transponders (6) and with the radio stations (5) being configured to synchronize the times of the time measurement units of the radio transponders (6) and/or with the radio stations (5) being configured to compare the times of the time measurement units of the radio transponders (6) with the times of the time measurement units of the radio stations (5).

16. A safety system (1) in accordance with at least one of the preceding claims, **characterized in that** the safety system has optical sensors for localizing and detecting the objects.

17. A safety system (1) in accordance with at least one of the preceding claims, **characterized in that** the safety system has radar sensors for localizing and detecting the objects.

18. A safety system in accordance with at least one of the preceding claims, **characterized in that** the safety system has RFID sensors for localizing and detecting the objects.

19. A safety system in accordance with at least one of the preceding claims, **characterized in that** the safety system has ultrasound sensors for localizing and detecting the objects.

20. A safety system (1) in accordance with at least one of the preceding claims, **characterized in that** a change of the safety function of the safety system (1) takes place by means of the control and evaluation unit (3) based on the checked position data.

21. A safety system (1) in accordance with at least one of the preceding claims, **characterized in that** a change of an order of process steps of an automation routine takes place by means of the control and evaluation unit (3) based on the checked position data.

22. A safety system (1) in accordance with at least one of the preceding claims, **characterized in that** position data checked by means of the control and evaluation unit (3) are checked for agreement with stored position data of a safe point of interest.

23. A method having a safety system for localizing at least two objects (2) having variable locations having at least one control and evaluation unit (3),
wherein the radio location system (4) has at least three arranged radio stations (5);
wherein at least one respective radio transponder (6) is arranged at the objects (2);
wherein position data of the radio transponder and thus position data of the objects (2) are determined by means of the radio location system (4); wherein the position data are transmitted from the radio station (5) of the radio location system (4) to the control and evaluation unit (3), and/or wherein the position data are transmitted from the radio transponder (6) to the control and evaluation unit,
wherein
the control and evaluation unit (3) is configured to cyclically detect the position data of the radio transponders,
with the radio transponders (6) having identification, and with a respective radio transponder (6) being associated with a respective object (2), whereby the control and evaluation unit (3) is configured to distinguish the objects (2); and
wherein the control and evaluation unit (3) is configured to associate a risk index with every object (2) at least in dependence on the position of the object (2) with respect to another object (2), wherein the risk index indicates how great the danger of an object is, with first objects (2) being persons (9) and second objects (2) being mobile vehicles (8), **characterized in that**
the radio location system (4) is an ultrawide band radio location system, with the frequency used being in the range from 3.1 GHz to 10.6 GHz, with the transmission energy per radio station (5) amounting to a maximum of 0,5 mW and with at least one job planning for a plant and target coordinates of the mobile vehicles (8) being read by the control and evaluation unit (3), with process steps of the machine or plant being read by the control and evaluation unit, and with a degree of productivity of the plant, of the machine (14), and/or of the objects (2) being detected by means of the control and evaluation unit (3),
with the control and evaluation unit (3) being configured to control and thus to influence the machine (14) and/or the mobile vehicle (8), with a change of an order of individual process steps of an automation routine being provided on a directly impending danger.

## Revendications

1. Système de sécurité (1) pour la localisation d'au moins deux objets (2) déplaçables, comprenant au moins une unité de commande et d'évaluation (3), comprenant au moins un système de radiolocalisation (4),
dans lequel
le système de radiolocalisation (4) comprend au moins trois stations radio (5) mises en place,
au moins un transpondeur radio (6) est mis en place sur chacun des objets (2),
le système de radiolocalisation (4) permet de déterminer des données de position du transpondeur radio et donc des données de position des objets (2),
les données de position peuvent être transmises de la station radio (5) du système de radiolocalisation (4) à l'unité de commande et d'évaluation (3), et/ou les données de position peuvent être transmises du transpondeur radio (6) à l'unité de commande et d'évaluation (3),
l'unité de commande et d'évaluation (3) est conçue pour saisir de manière cyclique les données de position des transpondeurs radio, les transpondeurs radio (6) présentant une identification, un transpondeur radio (6) respectif étant associé à un objet (2) respectif, ce qui permet à l'unité de commande et d'évaluation (3) de différencier les objets (2),
l'unité de commande et d'évaluation (3) est conçue pour attribuer à chaque objet (2) un indice de risque au moins en fonction de la position de l'objet (2) par rapport à un autre objet (2), l'indice de risque indiquant l'importance du danger d'un objet, les premiers objets (2) étant des personnes (9) et les deuxièmes objets (2) étant des véhicules mobiles (8),
**caractérisé en ce que**
le système de radiolocalisation (4) est un système de radiolocalisation à bande ultralarge, la fréquence utilisée étant dans la plage de 3,1 GHz à 10,6 GHz, l'énergie d'émission par station radio (5) étant au maximum de 0,5 mW, et au moins une planification des ordres pour une installation et des coordonnées de destination des véhicules mobiles (8) sont lues par l'unité de commande et d'évaluation (3), des étapes de processus de la machine ou de l'installation sont lues par l'unité de commande et d'évaluation, une mesure de productivité de l'installation, de la machine (14) et/ou des objets (2) est saisie au moyen de l'unité de commande et d'évaluation (3), l'unité de commande et d'évaluation (3) est conçue pour commander et donc influencer la machine (14) et/ou le véhicule mobile (8),
en cas de danger imminent, il est prévu une modification de l'ordre chronologique des étapes individuels d'un processus d'automatisation.

2. Système de sécurité (1) selon la revendication 1,
**caractérisé en ce que** les premiers objets (2) sont des objets mobiles (7) et les deuxièmes objets (2) sont des objets mobiles (7),
les transpondeurs radio (6) présentant une identification, un transpondeur radio (6) respectif étant associé à un objet mobile (7), ce qui permet à l'unité de commande et d'évaluation (3) de différencier les objets mobiles (7),
l'unité de commande et d'évaluation (3) étant conçue pour attribuer à chaque objet mobile (7) un indice de risque au moins en fonction de la position d'un objet mobile (7) par rapport à au moins un autre objet mobile (7).

3. Système de sécurité (1) selon la revendication 1,
**caractérisé en ce que** les premiers objets (2) sont des personnes (9) et les deuxièmes objets (2) sont des objets mobiles (7),
les transpondeurs radio (6) présentant une identification, un transpondeur radio (6) respectif étant associé à au moins une personne (9) et un transpondeur radio respectif étant associé à au moins un objet mobile (7), ce qui permet à l'unité de commande et d'évaluation (3) de différencier les personnes (9) et les objets mobiles (7),
l'unité de commande et d'évaluation (3) étant conçue pour attribuer à chaque personne (9) un indice de risque au moins en fonction de la position de la personne (9) par rapport à au moins un objet mobile (7).

4. Système de sécurité (1) selon l'une au moins des revendications précédentes,
**caractérisé en ce qu'**il existe au moins une machine fixe d'une installation avec un emplacement de danger de la machine, la position de l'emplacement de danger fixe étant connue de l'unité de commande et d'évaluation.

5. Système de sécurité (1) selon l'une au moins des revendications précédentes,
**caractérisé en ce que** l'unité de commande et d'évaluation (3) est conçue pour déterminer une position respective des transpondeurs radio (6) à différents moments et pour en définir une vitesse, une accélération, une direction de mouvement et/ou au moins une voie (12) ou une trajectoire des transpondeurs radio (6).

6. Système de sécurité (1) selon l'une au moins des revendications précédentes,
**caractérisé en ce que** le système de sécurité (1) comporte une carte ou un modèle de carte, et il est prévu une navigation de la machine déplaçable dans la carte ou dans le modèle de carte.

7. Système de sécurité selon l'une au moins des revendications précédentes, **caractérisé en ce qu'**au moins deux transpondeurs radio (6) sont mis en place sur chacun des objets (2), les deux transpondeurs radio (6) étant disposés à distance l'un de l'autre, et l'unité de commande et d'évaluation (3) étant conçue pour comparer de manière cyclique les données de position des transpondeurs radio (6) et pour former des données de position des objets (2) vérifiées de manière cyclique.

8. Système de sécurité (1) selon l'une au moins des revendications précédentes,
**caractérisé en ce que** le système de sécurité comporte une base de données, la base de données comprenant des données relatives à la probabilité de présence des objets et à la distribution de fréquence temporelle et/ou spatiale des objets.

9. Système de sécurité (1) selon l'une au moins des revendications précédentes,
**caractérisé en ce que** des avertissements sont émis à l'intention des personnes au moyen d'au moins une unité d'affichage.

10. Système de sécurité (1) selon l'une au moins des revendications précédentes,
**caractérisé en ce que** des valeurs de plausibilité sont formées sur la base des intensités de signal détectées des signaux radio des transpondeurs radio et à partir de la comparaison des données de position des transpondeurs radio.

11. Système de sécurité (1) selon l'une au moins des revendications précédentes,
**caractérisé en ce que** les distances entre les transpondeurs radio (6) sont connues de l'unité de commande et d'évaluation (3) et sont enregistrées dans une mémoire de l'unité de commande et d'évaluation.

12. Système de sécurité (1) selon l'une au moins des revendications précédentes,
**caractérisé en ce que** les distances entre les transpondeurs radio (6) auprès d'une personne varient ou sont variables en raison du mouvement de la personne.

13. Système de sécurité (1) selon l'une au moins des revendications précédentes,
**caractérisé en ce qu'**au moins trois transpondeurs radio sont mis en place, l'unité de commande et d'évaluation (3) étant conçue pour former des données d'orientation de l'objet (2) à partir des données de position des transpondeurs radio (6).

14. Système de sécurité (1) selon l'une au moins des revendications précédentes,
**caractérisé en ce qu'**au moins quatre, au moins six ou au moins huit transpondeurs radio (6) sont mis en place sur l'objet (2), deux transpondeurs radio (6) respectifs se trouvant sur une ligne droite respective, les lignes droites formant un angle respectif de 90° +/- 15° les unes par rapport aux autres.

15. Système de sécurité (1) selon l'une au moins des revendications précédentes,
**caractérisé en ce que** les transpondeurs radio (6) comportent chacun au moins une unité de mesure de temps, les stations radio (5) comportant également chacune au moins une unité de mesure de temps, les stations radio (5) étant conçues pour lire et/ou décrire les temps des unités de mesure de temps des transpondeurs radio (6), et les stations radio (5) étant conçues pour synchroniser les temps des unités de mesure de temps des transpondeurs radio (6) et/ou les stations radio (5) étant conçues pour comparer les temps des unités de mesure de temps des transpondeurs radio (6) avec les temps des unités de mesure de temps des stations radio (5).

16. Système de sécurité (1) selon l'une au moins des revendications précédentes,
**caractérisé en ce que** le système de sécurité comporte des capteurs optiques pour la localisation et la détection des objets.

17. Système de sécurité selon l'une au moins des revendications précédentes, **caractérisé en ce que** le système de sécurité comporte des capteurs radar pour la localisation et la détection des objets.

18. Système de sécurité selon l'une au moins des revendications précédentes, **caractérisé en ce que** le système de sécurité comporte des capteurs RFID pour la localisation et la détection des objets.

19. Système de sécurité selon l'une au moins des revendications précédentes, **caractérisé en ce que** le système de sécurité comprend des capteurs à ultrasons pour la localisation et la détection des objets.

20. Système de sécurité (1) selon l'une au moins des revendications précédentes,
**caractérisé en ce que**, sur la base des données de position vérifiées, une modification de la fonction de sécurité du système de sécurité (1) est effectuée au moyen de l'unité de commande et d'évaluation (3).

21. Système de sécurité (1) selon l'une au moins des revendications précédentes,
**caractérisé en ce que**, sur la base des données de position vérifiées, une modification d'un ordre chronologique des étapes d'un processus d'automatisation d'une installation est effectuée au moyen de l'unité de commande et d'évaluation (3).

22. Système de sécurité (1) selon l'une au moins des revendications précédentes,
**caractérisé en ce que**, au moyen de l'unité de commande et d'évaluation (3), les données de position vérifiées sont vérifiées quant à leur conformité avec des données de position enregistrées d'un repère de sécurité.

23. Procédé avec un système de sécurité pour la localisation d'au moins deux objets (2) déplaçables, comprenant au moins une unité de commande et d'évaluation (3),
dans lequel
le système de radiolocalisation (4) comprend au moins trois stations radio (5) mises en place,
au moins un transpondeur radio (6) respectif est mis en place sur chacun des objets (2),
des données de position du transpondeur radio et donc des données de position des objets (2) sont déterminées au moyen du système de radiolocalisation (4),
les données de position sont transmises de la station radio (5) du système de radiolocalisation (4) à l'unité de commande et d'évaluation (3),
et/ou les données de position sont transmises du transpondeur radio (6) à l'unité de commande et d'évaluation,
l'unité de commande et d'évaluation (3) est conçue pour saisir de manière cyclique les données de position des transpondeurs radio,
les transpondeurs radio (6) présentent une identification, un transpondeur radio (6) respectif étant associé à un objet (2) respectif, ce qui permet à l'unité de commande et d'évaluation (3) de différencier les objets (2), l'unité de commande et d'évaluation (3) est conçue pour attribuer à chaque objet (2) un indice de risque au moins en fonction de la position de l'objet (2) par rapport à un autre objet (2), l'indice de risque indiquant l'importance du danger d'un objet, les premiers objets (2) étant des personnes (9) et les deuxièmes objets (2) étant des véhicules mobiles (8),
**caractérisé en ce que** le système de radiolocalisation (4) est un système de radiolocalisation à bande ultralarge, la fréquence utilisée étant dans la plage de 3,1 GHz à 10,6 GHz, l'énergie d'émission par station radio (5) étant au maximum de 0,5 mW, et au moins une planification des ordres pour une installation et des coordonnées de destination des véhicules mobiles (8) sont lues par l'unité de commande et d'évaluation (3), des étapes de processus de la machine ou de l'installation sont lues par l'unité de commande et d'évaluation, une mesure de productivité de l'installation, de la machine (14) et/ou des objets (2) est saisie au moyen de l'unité de commande et d'évaluation (3),
l'unité de commande et d'évaluation (3) étant conçue pour commander et donc influencer la machine (14) et/ou le véhicule mobile (8),
en cas de danger imminent, il est prévu une modification de l'ordre chronologique des étapes individuels d'un processus d'automatisation.
